# EUROPEAN PATENT SPECIFICATION

(11) **EP 3 089 517 B1**
(45) Date of publication and mention of the grant of the patent: **05.09.2018**
(21) Application number: 14800646.3
(22) Date of filing: 10.06.2014
(51) Int. Cl.: H04W 36/00, H04W 36/04, H04W 36/32, H04W 36/18

(54) **SOFT HANDOVER PROCESSING METHOD AND APPARATUS**
VERFAHREN UND VORRICHTUNG FÜR SANFTE ÜBERGABEVERARBEITUNG
PROCÉDÉ ET APPAREIL DE TRAITEMENT DE TRANSFERT INTERCELLULAIRE SANS COUPURE

(30) Priority: 27.12.2013 CN 201310739120
(43) Date of publication of application: 02.11.2016
(73) Proprietor: ZTE Corporation, Shenzhen, Guangdong 518057 (CN)
(72) Inventor: ZHAN, Jianming, Shenzhen Guangdong 518057 (CN)
(74) Representative: Mozzi, Matteo
(86) International application number: PCT/CN2014/079629
(87) International publication number: WO 2014/187410

(56) References cited:
- CN-A- 1 430 357
- CN-A- 1 442 970
- CN-A- 1 520 078
- CN-A- 1 882 185
- "3rd Generation Partnership Project; Technical Specification Group Radio Access Network; Study on UMTS heterogeneous networks (Release 12)", 3GPP DRAFT; 25800-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 20 December 2013 (2013-12-20), XP050916582, Retrieved from the Internet: URL:http://www.3gpp.org/ftp/Specs/zItuInfo /M.2012-2/2014-12/Rel-12/25_series/ [retrieved on 2013-12-20]
- HUAWEI ET AL: "UL system performance with E-DCH decoupling", 3GPP DRAFT; R1-135682 UL SYSTEM PERFORMANCE WITH E-DCH DECOUPLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. San Francisco, USA; 20131111 - 20131115 13 November 2013 (2013-11-13), XP050735335, Retrieved from the Internet: URL:http://www.3gpp.org/ftp/Meetings_3GPP_ SYNC/RAN/RAN1/Docs/ [retrieved on 2013-11-13]
- NSN: "Detailed analysis of E-DCH decoupling", 3GPP DRAFT; R1-134747 DETAILED ANALYSIS OF E-DCH DECOUPLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717798, Retrieved from the Internet: URL:http://www.3gpp.org/ftp/tsg_ran/WG1_RL 1/TSGR1_74b/Docs/ [retrieved on 2013-09-28]
- HUAWEI ET AL: "TP on Section 6 of TR25.800", 3GPP DRAFT; R1-131627 TP ON SECTION 6 OF TR25.800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050697402, Retrieved from the Internet: URL:http://www.3gpp.org/ftp/tsg_ran/WG1_RL 1/TSGR1_72b/Docs/ [retrieved on 2013-04-06]

## Description

### Technical Field

The present disclosure relates to the field of mobile communication, and in particular to a soft handover processing method and device.

### Background

In a practical Universal Mobile Telecommunications System (UMTS) network deployment, Uplink (UL) and Downlink (DL) service links of users may be unbalanced. As a consequence, UL coverage of some cells may be limited, UL macro diversity gains may be reduced, or even no UL macro diversity gains can be achieved, thereby causing call drops, very low UL and DL data service traffic or handover failures of the users and also producing interference to service experiences of the users in an area where UL and DL service links are balanced. There may be multiple reasons for unbalance of UL and DL service links of users, for example:
1) pilot configurations of some cells are different in a network plan, and pilots of some cells are configured to be slightly higher or lower than pilots of neighboring cells;
2) different production batches of Node B equipment in a network or improvements in receiving sensitivity of new Node Bs cause great differences between receiving sensitivity of neighboring Node Bs;
3) external interference causes reduction of DL coverage or reduction of UL coverage; and
4) in some user hotspots or blind areas, low-power Node Bs are added in coverage areas of macro cells to meet service requirements of the hotspots or the blind areas, and because power of the low-power Node Bs is greatly different from power of macro Node Bs but receiving sensitivity of the low-power Node Bs is equal to or slightly different from receiving sensitivity of the macro Node Bs, so that larger UL and DL service link unbalance areas may appear in edge areas of the low-power Node Bs.

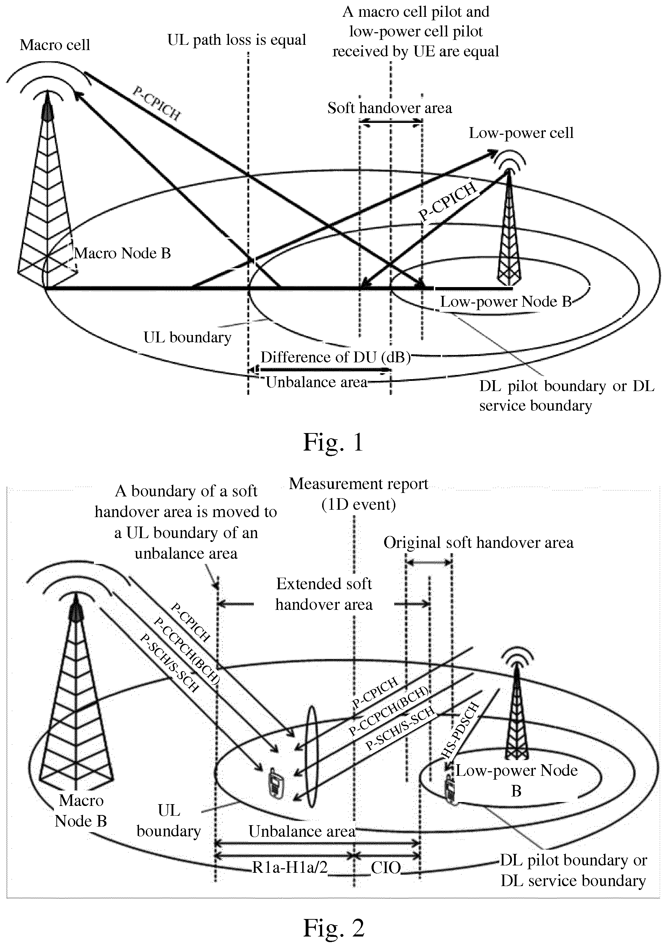

Along with rapid development of mobile wideband services in recent years, dramatically increasing application of various data services on 3rd Generation Partnership Project (3GPP) intelligent terminals (mobile phones, data cards, iPads and the like) directly causes an explosive growth trend of data traffic in a hotspot and various mobile Internet-based applications (APPs), and it is quite difficult to completely solve the problem by only enhancing the performance of conventional macro cells. A high consensus is reached in the mobile communication industry that intra-frequency low-power Node Bs (such as micro and pico Node Bs) are deployed in macro cells to solve the problem of sharply increasing data traffic and meet requirements of various mobile Internet-based APPs. These low-power Node Bs are deployed in the macro cells to implement complementary coverage at a hotspot to form a Heterogeneous Network (Hetnet) where the macro cells and low-power cells coexist. The 3GPP also sets up a project to make researches about a UMTS Hetnet to mainly solve the problem of unbalance of UL and DL service links. As shown in Fig. 1, Fig. 1 is a diagram showing unbalance of UL and DL service links of a UMTS Hetnet. In Fig. 1, a UL boundary refers to a boundary location where UL path loss from User Equipment (UE) to a macro cell is equal to UL path loss from the UE to a low-power cell; a DL boundary refers to a boundary location where a macro cell pilot and a low-power cell pilot received by the UE are equal; a soft handover area is an area determined on the basis of measurement of magnitudes of DL pilots, and in the soft handover area, the UE have Radio Links (RLs) with the macro cell and the low-power cell simultaneously; and an unbalance area refers to that macro cell pilot power received by UE in the UL boundary is DU (dB) higher than received low-power pilot power, or, transmitted signal power, received by the low-power cell, of the UE in the DL boundary is DU (dB) higher than transmitted signal power, received by the macro cell, of the UE in the DL boundary.

Document "3^{rd} Generation Partnership Project; Technical Specification Group Radio Access Network; Study on UMTS heterogeneous networks (Release 12)", XP050916582, discloses evaluation results and analysis from the study item on "UMTS Heterogeneous Networks".

Document HUAWEI ET AL: "UL system performance with E-DCH decoupling", XP050735335, discloses uplink system simluation with different CIO values for HetNet baseline, E-DCH decoupling and early SCC solutions.

### Summary

The invention is set out in the appended set of claims. The embodiments and/or examples of the following description which are not covered by the appended claims are considered as not being part of the present invention. In order to solve an existing technical problem, the embodiments of the present disclosure provide a soft handover processing method and device.

An embodiment of the present disclosure provides a soft handover processing method, wherein an extended soft handover area between a macro cell and a low-power cell is divided into a UL soft combining gain area and a DL soft combining gain area, the method including that:
a Radio Network Controller (RNC) receives an event measurement report reported by UE; and
when it is determined that the UE enters the UL soft combining gain area from the macro cell, enters the DL soft combining gain area from the UL soft combining gain area, enters the low-power cell from the DL soft combining gain area, enters the DL soft combining gain area from the low-power cell, enters the UL soft combining gain area from the DL soft combining gain area or enters the macro cell from the UL soft combining gain area according to the event measurement report, a corresponding soft handover strategy is executed respectively.

Another embodiment of the present disclosure provides a soft handover processing device, wherein an extended soft handover area between a macro cell and a low-power cell is divided into a UL soft combining gain area and a DL soft combining gain area, the device including:
a receiving component, configured to receive an event measurement report reported by UE; and
a processing component, configured to, when it is determined that the UE enters the UL soft combining gain area from the macro cell, enters the DL soft combining gain area from the UL soft combining gain area, enters the low-power cell from the DL soft combining gain area, enters the DL soft combining gain area from the low-power cell, enters the UL soft combining gain area from the DL soft combining gain area or enters the macro cell from the UL soft combining gain area according to the event measurement report, execute a corresponding soft handover strategy respectively.

According to the soft handover processing method and device provided by the embodiments of the present disclosure, the extended soft handover area is divided into the UL soft combining gain area (also called a UL macro diversity combining gain area) and the DL soft combining gain area (also called a DL macro diversity combining gain area), and the corresponding soft handover strategy is executed on the basis of the divided UL soft combining gain area and DL soft combining gain area. In such a manner, unnecessary resource waste of the macro cell and the low-power cell is avoided without upgrading a conventional UMTS terminal, thereby improving overall performance of a UMTS Hetnet.

### Brief Description of the Drawings

Fig. 1 is a diagram showing unbalance of UL and DL service links of a UMTS Hetnet;
Fig. 2 is a diagram of configuring a Cell Individual Offset (CIO) of a cell of a low-power Node B to extend a soft handover area to trigger soft handover in a boundary of an unbalance area according to an embodiment of the present disclosure;
Fig. 3 is a diagram of enhancing pilot power of a cell of a low-power Node B to extend a soft handover area to trigger soft handover in a boundary of an unbalance area according to an embodiment of the present disclosure;
Fig. 4 is a diagram of enhancing pilot power of a cell of a low-power Node B to extend a soft handover area to trigger soft handover in an area extending to a direction of a macro cell outside a boundary of an unbalance area according to an embodiment of the present disclosure;
Fig. 5 is a diagram of a first case of handover area division in a process of movement of UE from a macro cell to a low-power cell according to an embodiment of the present disclosure;
Fig. 6 is a diagram of a second case of handover area division in a process of movement of UE from a macro cell to a low-power cell according to an embodiment of the present disclosure;
Fig. 7 is a diagram of a first case of handover area division in a process of movement of UE from a low-power cell to a macro cell according to an embodiment of the present disclosure;
Fig. 8 is a diagram of a second case of handover area division in a process of movement of UE from a low-power cell to a macro cell according to an embodiment of the present disclosure;
Fig. 9 is a diagram of a relationship between UL and DL channels and each of a macro cell and a low-power cell when UE is in a UL combining gain area in a process of movement from the macro cell to the low-power cell according to an embodiment of the present disclosure;
Fig. 10 is a diagram of a relationship between UL and DL channels and each of a macro cell and a low-power cell when UE is in a UL combining gain area in a process of movement from the low-power cell to the macro cell according to an embodiment of the present disclosure;
Fig. 11 is a diagram of a relationship between UL and DL channels and each of a macro Node B and a low-power Remote Radio Unit (RRU) when UE is in a DL combining gain area in a process of movement from a macro cell to a low-power cell according to an embodiment of the present disclosure;
Fig. 12 is a diagram of a relationship between UL and DL channels and each of a macro Node B and a low-power Node B when UE is in a DL combining gain area in a process of movement from a macro cell to a low-power cell according to an embodiment of the present disclosure;
Fig. 13 is a diagram of a relationship between UL and DL channels and each of a macro Node B and a low-power RRU when UE is in a DL combining gain area in a process of movement from a low-power cell to a macro cell according to an embodiment of the present disclosure;
Fig. 14 is a diagram of a relationship between UL and DL channels and each of a macro Node B and a low-power Node B when UE is in a DL combining gain area in a process of movement from a low-power cell to a macro cell according to an embodiment of the present disclosure;
Fig. 15 is a flowchart of a soft handover processing method according to an embodiment of the present disclosure;
Fig. 16 is a processing flowchart of triggering a 1A event measurement report during movement of UE from a macro cell to a low-power cell according to an embodiment of the present disclosure;
Fig. 17 is a processing flowchart of triggering a 1D event measurement report during movement of UE from a macro cell to a low-power cell according to an embodiment of the present disclosure;
Fig. 18 is a processing flowchart of triggering a 1B event measurement report during movement of UE from a macro cell to a low-power cell according to an embodiment of the present disclosure;
Fig. 19 is a processing flowchart of triggering a 1A event measurement report during movement of UE from a low-power cell to a macro cell according to an embodiment of the present disclosure;
Fig. 20 is a processing flowchart of triggering a 1D event measurement report during movement of UE from a low-power cell to a macro cell according to an embodiment of the present disclosure;
Fig. 21 is a processing flowchart of triggering a 1B event measurement report during movement of UE from a low-power cell to a macro cell according to an embodiment of the present disclosure;
Fig. 22 is a diagram of UL and DL service connection of UE in a macro cell according to an embodiment of the present disclosure;
Fig. 23 is a diagram of UL and DL service connection after UE enters a UL combining area during movement from a macro cell to a low-power cell according to an embodiment of the present disclosure;
Fig. 24 is a diagram of UL and DL service connection after UE enters a DL combining area during movement from a macro cell to a low-power cell according to an embodiment of the present disclosure;
Fig. 25 is a diagram of UL and DL service connection after UE enters a low-power cell during movement from a macro cell to the low-power cell according to an embodiment of the present disclosure;
Fig. 26 is a diagram of UL and DL service connection of UE in a low-power cell according to an embodiment of the present disclosure;
Fig. 27 is a diagram of UL and DL service connection after UE entering a DL combining area during movement from a low-power cell to a macro cell according to an embodiment of the present disclosure;
Fig. 28 is a diagram of UL and DL service connection after UE enters a UL combining area during movement from a low-power cell to a macro cell according to an embodiment of the present disclosure; and
Fig. 29 is a diagram of UL and DL service connection after UE enters a macro cell during movement from a low-power cell to the macro cell according to an embodiment of the present disclosure.

### Detailed Description of the Embodiments

The technical solutions of the present disclosure will be further elaborated below with reference to the drawings and specific embodiments in detail.

In order to enable a user in a UL and DL service unbalance area to be served by a low-power Node B, a soft handover area is extended in the embodiment of the present disclosure, and multiple soft handover area extension methods may be adopted according to different sizes of the UL and DL service link unbalance area.

An implementation mode for extension of the soft handover area is shown in Fig. 2, and Fig. 2 is a diagram of extending a soft handover area by a method of regulating a CIO of a low-power cell.

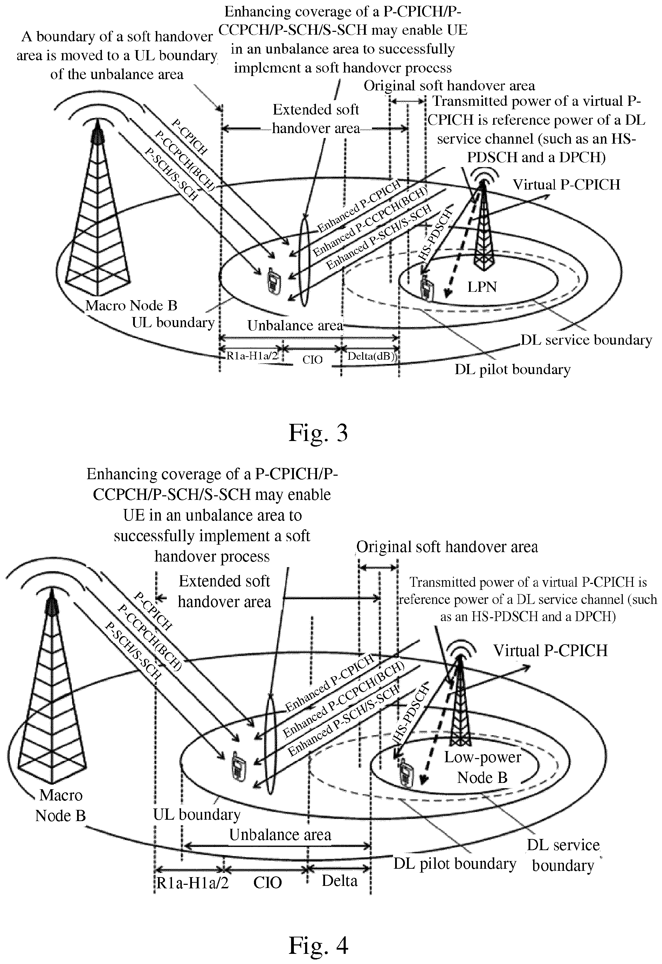

Another implementation mode for extension of the soft handover area adopts a method for regulating the CIO, enhancing transmitted power of a Primary Common Pilot Channel (P-CPICH) of the low-power cell and enhancing transmitted power of a broadcast channel (i.e. a Primary Common Control Physical Channel (P-CCPCH)) of the low-power cell, referring to Fig. 3 and Fig. 4, wherein Fig. 3 is a diagram of extending a soft handover area by a method of regulating a CIO of a low-power cell, enhancing transmitted power of a P-CPICH of the low-power cell and enhancing transmitted power of a broadcast channel of the low-power cell, so that a boundary, close to a macro Node B side, of the soft handover area is the same as a UL boundary of an unbalance area; and Fig. 4 is a diagram of extending a soft handover area by a method of regulating a CIO of a low-power cell, enhancing transmitted power of a P-CPICH of the low-power cell and enhancing transmitted power of a broadcast channel of a cell of a low-power Node B, so that a range of the soft handover area includes the UL boundary of the unbalance area. In the method of enhancing the P-CPICH of the cell of the low-power Node B, transmitted power of a DL service related physical channel of a Lower Power Node (LPN) (i.e. the low-power Node B) takes power of a virtual P-CPICH as a basis reference, and the transmitted power of the P-CPICH is increased by an increment, the increment being Delta (dB).

Extending the soft handover area enables the user in the unbalance area to enjoy UL service of the low-power cell, but in a practical UMTS Hetnet deployment, maximum output power of a macro cell is 20W and transmitted power of each carrier of a low-power Node B is relatively low, for example, 2.5W or 1.25W, so that the UL and DL unbalance area may have a relatively great difference, for example, 9dB or 12dB, and then the soft handover area is ranged to be 9dB or 12dB. Generally speaking, under a condition of medium/low-speed movement of a user, there may be a positive gain only when power of two Wideband Code Division Multiple Access (WCDMA) ULs or two WCDMA DLs has a difference of 4∼6dB, and if the difference between the power of the two ULs or the two DLs is greater, the gain is smaller; and a negative gain is generated when the difference between the power of the two ULs or the two DLs is more than 4∼6dB.

Therefore, the embodiment of the present disclosure proposes to re-divide the extended soft handover area to divide the extended soft handover area into a UL soft combining gain area (also called a UL macro diversity combining gain area) and a DL soft combining gain area (also called a DL macro diversity combining gain area), and boundaries of the UL soft combining gain area and the DL soft combining gain area are distinguished by soft handover measurement report event processing, wherein the UL soft combining gain area refers to an area where both the macro cell and the low-power cell may receive UL signals of UE of a certain area in a UL direction and selective combination is performed to generate a gain of the UL signals; and the DL soft combining gain area refers to an area where both the macro cell and the low-power cell send DL signals to UE of a certain area in a DL direction and combination is performed on a UE side to generate a gain of the DL signals.

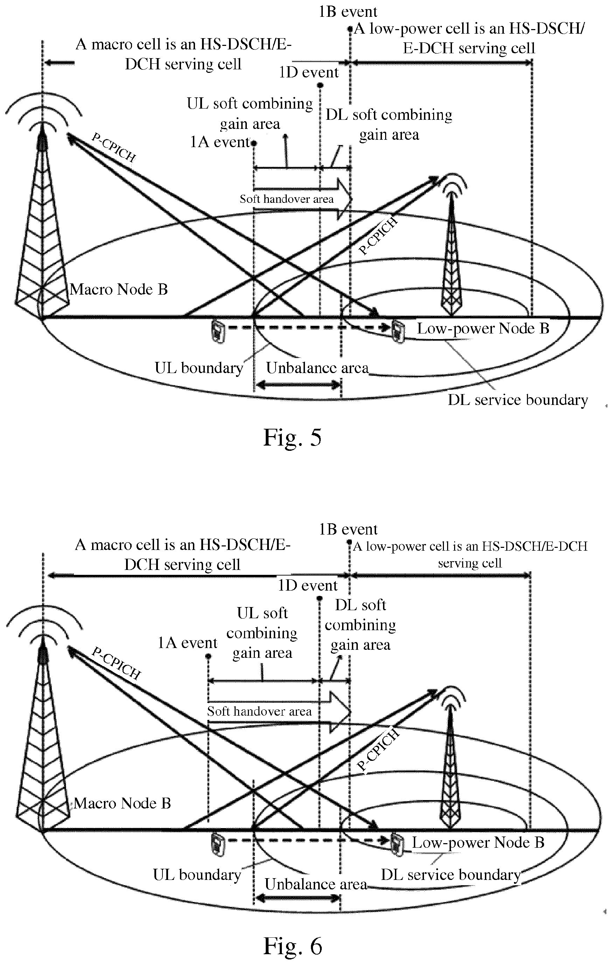

Specifically:
the UL soft combining gain area and the DL soft combining gain area are divided in a soft handover process during movement of a user from the macro cell to the low-power cell, referring to Fig. 5 and Fig. 6.

As shown in Fig. 5, a boundary of 1A event soft handover in the process of movement of the user from the macro cell to the low-power cell is the same as a UL boundary between the macro cell and the low-power cell, and for a user in the UL soft combining gain area, both the macro cell and the low-power cell may receive a UL signal and perform soft combination, thereby generating a UL gain and improving system performance of the network; and a user in the DL soft combining gain area simultaneously receives DL signals of the macro cell and the low-power cell and performs soft combination, thereby generating a DL gain and improving the system performance of the network.

As shown in Fig. 6, the boundary of 1A event soft handover in the process of movement of the user from the macro cell to the low-power cell is different from the UL boundary between the macro cell and the low-power cell; and compared with Fig. 5, Fig. 6 shows advanced execution of soft handover in an area extending to the macro cell on the UL boundary, so that more users in the macro cell may enjoy the UL soft combining gain of the macro cell and the low-power cell to improve the system performance of the network, and the user in the DL soft combining gain area simultaneously receives the DL signals of the macro cell and the low-power cell and performs soft combination to generate the DL gain and improve the system performance of the network.

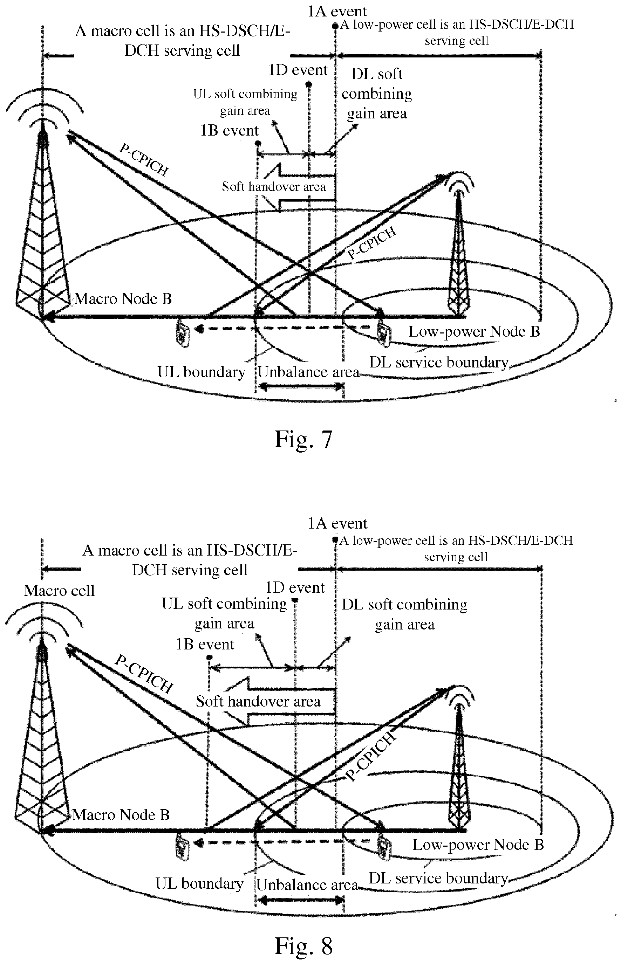

The UL soft combining gain area and the DL soft combining gain area are divided in a soft handover process during movement of the user from the low-power cell to the macro cell, referring to Fig. 7 and Fig. 8.

As shown in Fig. 7, a boundary of 1A event soft handover in the process of movement of the user from the low-power cell to the macro cell is the same as the UL boundary between the macro cell and the low-power cell, and for a user in the UL soft combining gain area, both the macro cell and the low-power cell may receive a UL signal and perform soft combination, thereby generating a UL gain and improving system performance of the network; and a user in the DL soft combining gain area simultaneously receives DL signals of the macro cell and the low-power cell and performs soft combination, thereby generating a DL gain and improving the system performance of the network.

As shown in Fig. 8, a boundary of 1B event soft handover in the process of movement of the user from the macro cell to the low-power cell is different from the UL boundary between the macro cell and the low-power cell; and compared with Fig. 7, Fig. 8 shows delayed execution of 1B event soft handover of UE in the area extending to the macro cell on the UL boundary, so that more users in the macro cell may enjoy the UL soft combining gain of the macro cell and the low-power cell to improve the system performance of the network, and the user in the DL soft combining gain area simultaneously receives the DL signals of the macro cell and the low-power cell and performs soft combination to generate the DL gain and improve the system performance of the network.

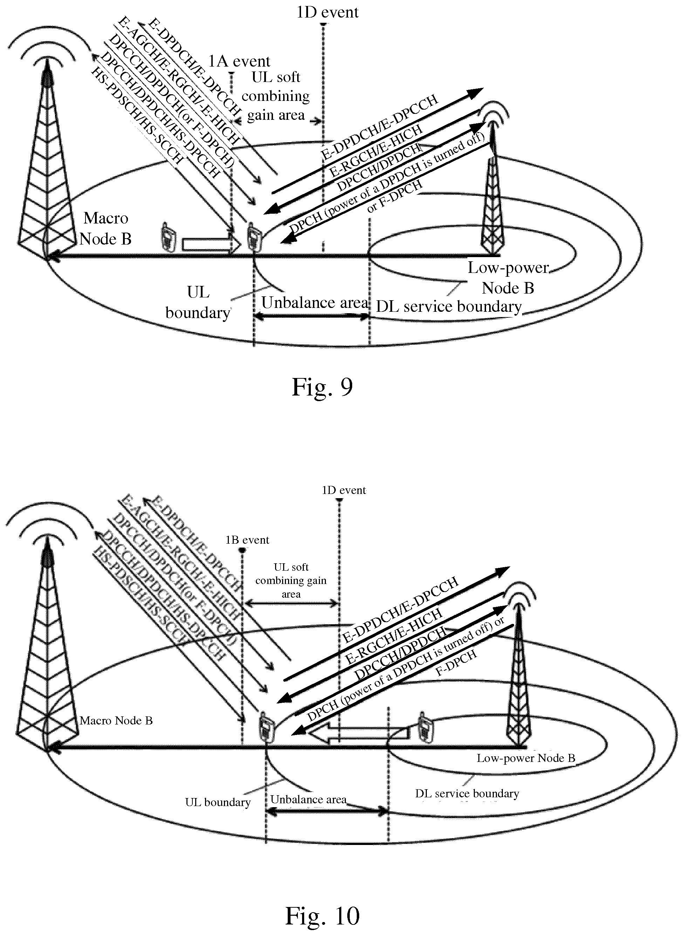

For the user in the UL soft combining gain area, a processing manner adopted by the macro cell and the low-power cell for an R99 UL service and a High Speed Uplink Packet Access (HSUPA) service in terms of UL service refers to Fig. 9 and Fig. 10.

Fig. 9 shows a UL and DL channel processing manner of the macro cell and the low-power cell after the user enters the UL soft combining gain area by triggering a 1A event measurement report when moving from the macro cell to the low-power cell. In terms of UL channel, both the macro cell and the low-power cell receive UL signals in the area, process an Enhanced Dedicated Channel (E-DCH) Dedicated Physical Data Channel (E-DPDCH), an E-DCH Dedicated Physical Control Channel (E-DPCCH), a Dedicated Physical Data Channel (DPDCH) and a Dedicated Physical Control Channel (DPCCH) and perform soft combination processing, thereby generating a UL gain; and in terms of DL channel, the macro cell sends High Speed Physical Downlink Shared Channel (HS-PDSCH), Shared Control Channel for HS-DSCH (HS-SCCH) DPDCH and DPCCH signals to UE in the area, and the low-power cell does not send any HS-PDSCH, HS-SCCH, DPDCH and DPCCH signal to the UE in the area, and only sends E-DCH Relative Grant Channel (E-RGCH), E-DCH Hybrid Automatic Repeat Request Indicator Channel (E-HICH), DPCCH or Fractional Dedicated Physical Channel (F-DPCH) signals.

Fig. 10 shows a UL and DL processing manner of the macro cell and the low-power cell after the user enters the UL soft combining gain area by triggering a 1D event measurement report when moving from the low-power cell to the macro cell, and the UL and DL processing manner, shown in Fig. 10, of the macro cell and the low-power cell is the same as the UL and DL processing manner, shown in Fig. 9, of the macro cell and the low-power cell.

Both the macro cell and the low-power cell receive UL E-DPDCH/E-DPCCH/DPDCH/DPCCH signals and implement selective soft combination or maximum-ratio soft combination. If a physical Node B form of the low-power cell is a low-power Node B, selective soft combination is implemented in an RNC, and if the low-power cell is an RRU connected to the macro cell, maximum-ratio soft combination is implemented on a macro Node B side by baseband processing.

For the user in the UL soft combining gain area, the processing manner adopted by the macro cell and the low-power cell for the R99 UL service and the HSUPA service in terms of UL service refers to Fig. 9 and Fig. 10. Fig. 9 shows the UL and DL channel processing manner of the macro cell and the low-power cell after the user enters the UL soft combining gain area when moving from the macro cell to the low-power cell; and Fig. 10 shows the UL and DL processing manner of the macro cell and the low-power cell after the user enters the UL soft combining gain area when moving from the low-power cell to the macro cell.

The low-power cell does not send any data signal on a DPDCH, but the low-power cell sends a related control or feedback signal on a DPCCH (or an F-DPCH) or an E-HICH/E-RGCH.

For the user in the UL soft combining gain area, both a High Speed DL Shared Channel (HS-DSCH) serving cell and an E-DCH serving cell are macro cells.

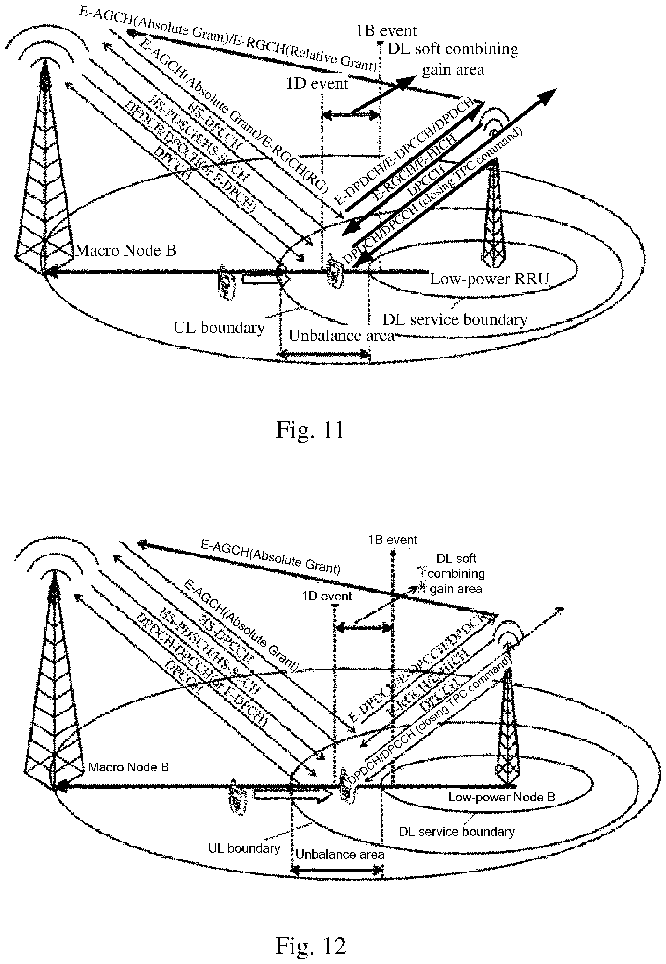

For the user in the DL soft combining gain area, a processing manner adopted by the macro cell and the low-power cell for the R99 UL service and a High Speed DL Packet Access (HSDPA) service in terms of DL service refers to Fig. 11, Fig. 12, Fig. 13 and Fig. 14.

Fig. 11 and Fig. 12 show UL and DL channel processing manners of the macro cell and the low-power cell after the user enters the DL soft combining gain area by triggering a 1D event measurement report when moving from the macro cell to the low-power cell. Fig. 11 shows a UL and DL channel processing condition under the condition that physical equipment corresponding to the low-power cell is an RRU, and in terms of UL channel, the macro cell receives UL HS-DPCCH and DPCCH signals of UE in the area, and does not receive UL E-DPDCH, E-DPCCH and DPDCH signals, and the low-power cell does not receive the UL HS-DPCCH signal, and receives the UL E-DPDCH, E-DPCCH, DPDCH and DPCCH signals; and in terms of DL channel, both the macro cell and the low-power cell send DPDCH and DPCCH signals to the UE in the area, the UE performs DL combination on the received DPDCH and DPCCH signals, and in addition, the low-power cell sends DL E-RGCH and E-HICH signals to the UE in the area, and the macro cell sends DL E-DCH Absolute Grant Channel (E-AGCH) and E-RGCH signals to the UE in the area, contents of the E-RGCH and E-AGCH signals being forwarded by the low-power cell through a transmission interface between the macro Node B and the low-power RRU.

Fig. 12 shows a UL and DL channel processing condition under the condition that physical equipment corresponding to the low-power cell is a low-power Node B, and in terms of UL channel, the macro cell receives UL HS-DPCCH and DPCCH signals of UE in the area, and does not receive UL E-DPDCH, E-DPCCH and DPDCH signals, and the low-power cell does not receive the UL HS-DPCCH signal, and receives the UL E-DPDCH, E-DPCCH, DPDCH and DPCCH signals; and in terms of DL channel, both the macro cell and the low-power cell send DPDCH and DPCCH signals to the UE in the area, the UE performs DL combination on the received DPDCH and DPCCH signals, and in addition, the low-power cell sends DL E-RGCH and E-HICH signals to the UE in the area, and the macro cell sends a DL E-AGCH signal to the UE in the area, a content of the E-AGCH signal being forwarded by the low-power cell through a transmission interface between the macro Node B and the low-power Node B.

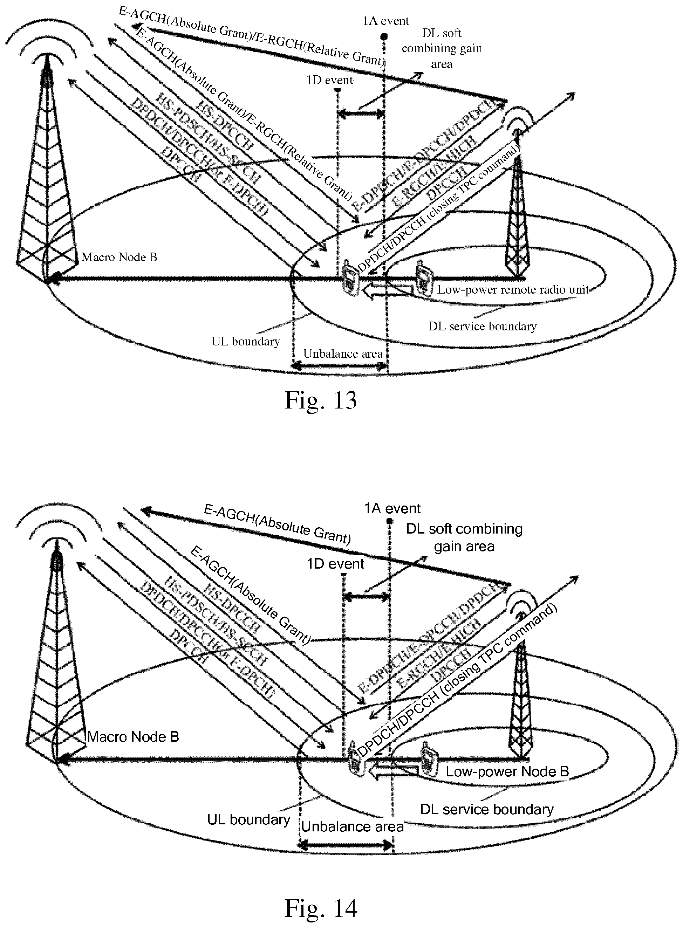

Fig. 13 and Fig. 14 show UL and DL channel processing manners of the macro cell and the low-power cell after the user enters the DL soft combining gain area by triggering a 1A event measurement report when moving from the low-power cell to the macro cell. The UL and DL channel processing manner shown in Fig. 13 is the same as the UL and DL channel processing manner shown in Fig. 11, and the UL and DL channel processing manner shown in Fig. 14 is the same as the UL and DL channel processing manner shown in Fig. 12.

It is important to note that both the macro cell and the low-power cell send signals on DPCHs (including a DPDCH and a DPCCH) for the R99 service, so that two paths of DL signals are received for soft combination in the DL direction on a UE side, wherein the low-power cell does not send any Transmit Power Control (TPC) command for the DPCCH of the UE in the DL soft combining gain area; and
for the HSDPA service, the macro cell is still an HS-DSCH serving cell of the UE in the area, so that a High Speed Physical DL Shared Channel (HS-PDSCH), a Shared Control Channel for HS-DSCH and an F-DPCH are sent on the macro cell, wherein the low-power cell does not send F-DPCH power for the UE in the DL soft combining gain area.

For the user in the DL soft combining gain area, in terms of UL service, for the R99 service, the macro cell does not receive the DPDCH signal, and the low-power cell receives the DPDCH signal; and for the HSUPA service, the macro cell does not receive the E-DPDCH signal, the low-power cell receives the UL E-DPDCH signal, the macro cell transmits an E-AGCH to the UE, and if the low-power Node B is an RRU, the macro cell may also transmit an E-RGCH to the UE (referring to Fig. 11), wherein a content of the E-AGCH or EE-RGCH transmitted by the macro cell is transmitted by the low-power cell through a transmission medium between the macro cell and the low-power cell, and the low-power cell transmits an E-HICH to the UE, referring to Fig. 11, Fig. 12, Fig. 13 and Fig. 14.

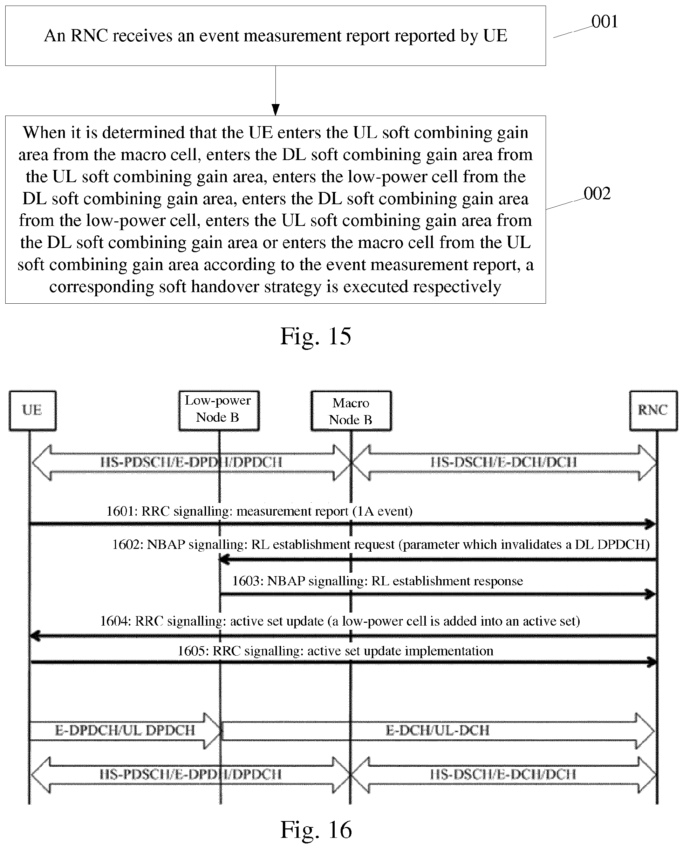

The embodiment of the present disclosure provides a soft handover processing method, wherein an extended soft handover area between a macro cell and a low-power cell is divided into a UL soft combining gain area and a DL soft combining gain area, the method, as shown in Fig. 15, mainly including:
Step 001: an RNC receives an event measurement report reported by UE; and
Step 002: when it is determined that the UE enters the UL soft combining gain area from the macro cell, enters the DL soft combining gain area from the UL soft combining gain area, enters the low-power cell from the DL soft combining gain area, enters the DL soft combining gain area from the low-power cell, enters the UL soft combining gain area from the DL soft combining gain area or enters the macro cell from the UL soft combining gain area according to the event measurement report, a corresponding soft handover strategy is executed respectively.

In an implementation mode, when it is determined that the UE enters the UL soft combining gain area from the macro cell, the executed soft handover strategy includes that:
the RNC sends an RL establishment request message to a Node B of the low-power cell, the message including a parameter which invalidates a DL DPDCH; and
the RNC initiates an active set update process to the UE, and notifies the UE to add the low-power cell into an active set.

Descriptions will be given below with an example.

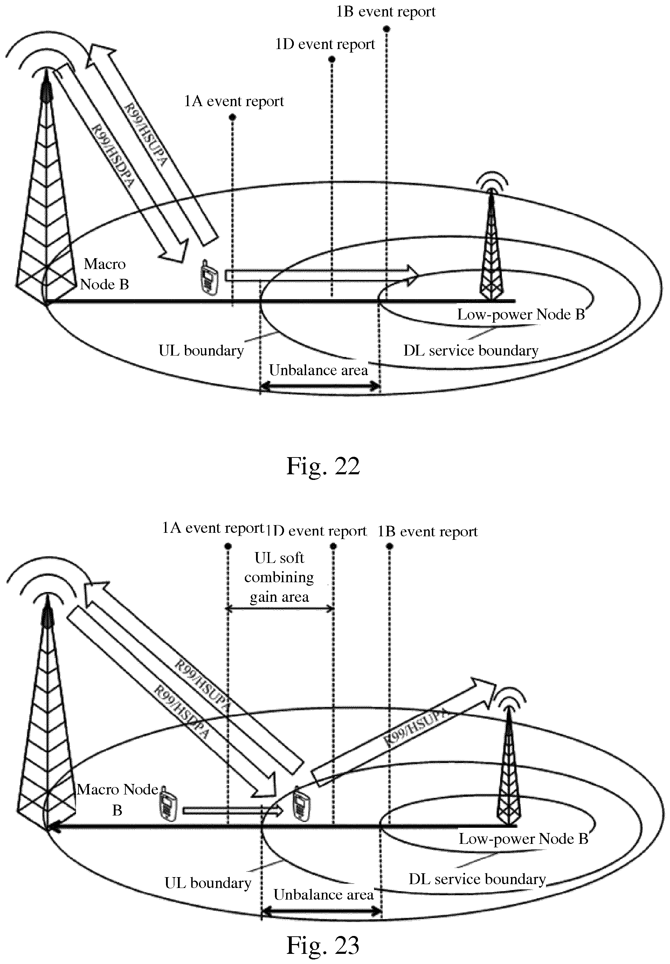

Under an initial condition, the UE only forms a UL and DL service connection with the macro cell, and there is no UL and DL service connection formed between the UE and the low-power cell, as shown in Fig. 22; and a processing flow of triggering a 1A event measurement report during movement of the UE from the macro cell to the low-power cell, as shown in Fig. 16, mainly includes:
Step 1601: the UE reports the 1A event measurement report to the RNC when passing through a 1A event report boundary shown in Fig. 22 in a process of movement from the macro cell to the low-power cell;
Step 1602∼1603: the RNC initiates an RL establishment process to a low-power Node B, and the low-power Node B returns an RL establishment response to the RNC, wherein the RL establishment request message includes the parameter which invalidates the DL DPDCH, so that there is no DPDCH data sent to the UE through an RL established by the low-power cell;
Step 1604: the RNC initiates the active set update process to the UE, and notifies the UE to add the low-power cell into the active set; and
Step 1605: the UE adds the low-power cell into the active set, and returns an active set update implementation message to the RNC.

By the processing flow shown in Fig. 16, a UL service of the UE is received by both the macro cell and the low-power cell, and is finally subjected to soft combination processing, the UE only receives a DL service of the macro cell, and the low-power cell does not send any DL service to the UE, referring to a relationship, shown in Fig. 23, between UL and DL services of the UE and each of the macro cell and the low-power cell.

In another implementation mode, when it is determined that the UE enters the DL soft combining gain area from the UL soft combining gain area, the executed soft handover strategy includes that:
the RNC sends an RL reconfiguration preparation message to the Node B of the low-power cell, the message including a parameter which validates the DL DPDCH and notification about forwarding of an Absolute Grant (AG);
the RNC sends an RL reconfiguration preparation message to a Node B of the macro cell, the message including a parameter which is configured to send an AG and a parameter which invalidates a UL E-DPDCH, an E-DPCCH and a UL DPDCH; and
the RNC sends a new measurement control message to the UE, wherein an R1b parameter and an H1b parameter of the event measurement report are modified in the new measurement control message to enable the UE to report a corresponding 1B event measurement report when moving to a DL service boundary between the macro cell and the low-power cell.

Descriptions will be given below with an example.

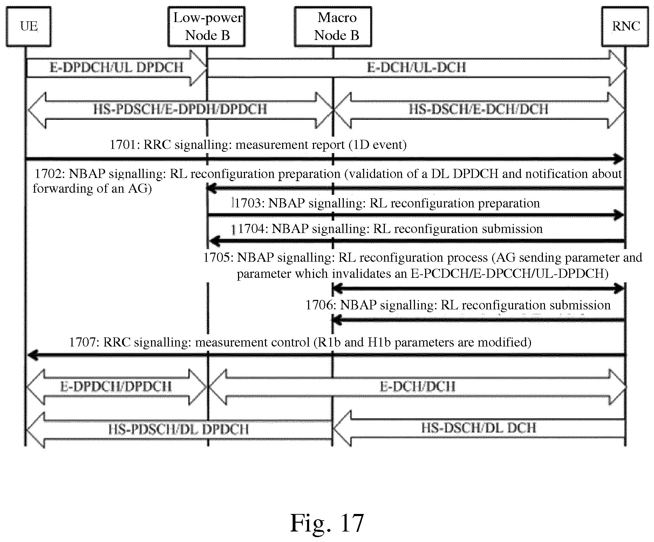

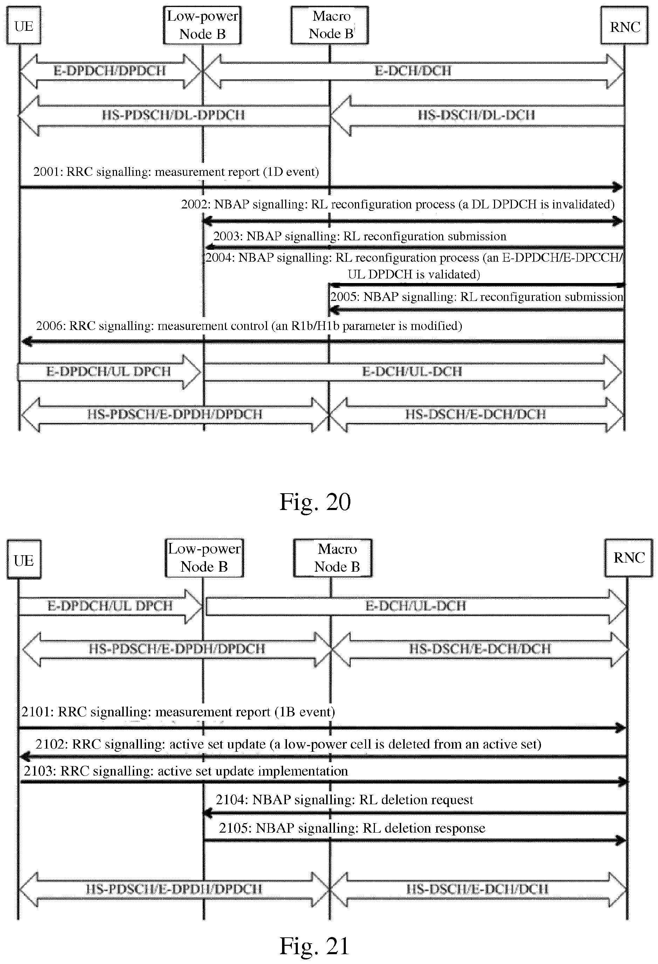

A processing flow of triggering a 1D event measurement report during movement of the UE from the macro cell to the low-power cell, as shown in Fig. 17, mainly includes:
Step 1701: the UE reports the 1D event measurement report to the RNC when passing through a 1D event report boundary shown in Fig. 21 in the process of movement from the macro cell to the low-power cell;
Step 1702∼1703: the RNC initiates an RL reconfiguration process to the low-power Node B, and the low-power Node B returns an RL reconfiguration response to the RNC, wherein the RL reconfiguration preparation message includes the parameter which validates the DL DPDCH and notification about forwarding of the AG, so that an RL reconfigured by the low-power cell sends DPDCH data to the UE and forwards a ULAG content for the UE to the macro cell;
Step 1704: the RNC sends an RL reconfiguration submission message to the low-power Node B;
Step 1705: the RNC initiates an RL reconfiguration preparation process to a macro Node B, wherein the RL reconfiguration preparation message includes the parameter which is configured to send the AG and the parameter which invalidates the UL E-DPDCH/E-DPCCH/UL DPDCH, so that an RL reconfigured by the macro Node B sends the UL AG forwarded by the low-power Node B to the UE, and the RL does not receive and process any UL E-DPDCH/E-DPCCH/UL DPDCH signal;
Step 1706: the RNC sends an RL reconfiguration submission message to the macro Node B; and
Step 1707: the RNC sends a new measurement control message to the UE, a parameter such as thresholds R1b and H1b of the 1B event measurement report being modified in the measurement control message to enable the UE to report the 1B event measurement report on a DL service boundary between the macro cell and the low-power cell.

Setting of the parameter such as the thresholds R1b and H1b of the 1B event measurement report is determined according to different cell soft handover area extension methods.

It is important to note that the thresholds of the 1B event measurement report are modified in a manner that R1b=0 and H1b is set according to a practical condition (under the principle of avoiding frequent Ping-Pong soft handover) when only a CIO is adopted to extend a soft handover area (for example, in Fig. 2).

When the low-power cell extends the soft handover area by adopting the CIO and pilot enhancement (for example, pilot power in Fig. 3 is enhanced by Delta dB), the thresholds of the 1B event measurement report are modified in a manner that R1b=Delta and H1b is set according to a practical condition (under the principle of avoiding frequent Ping-Pong soft handover).

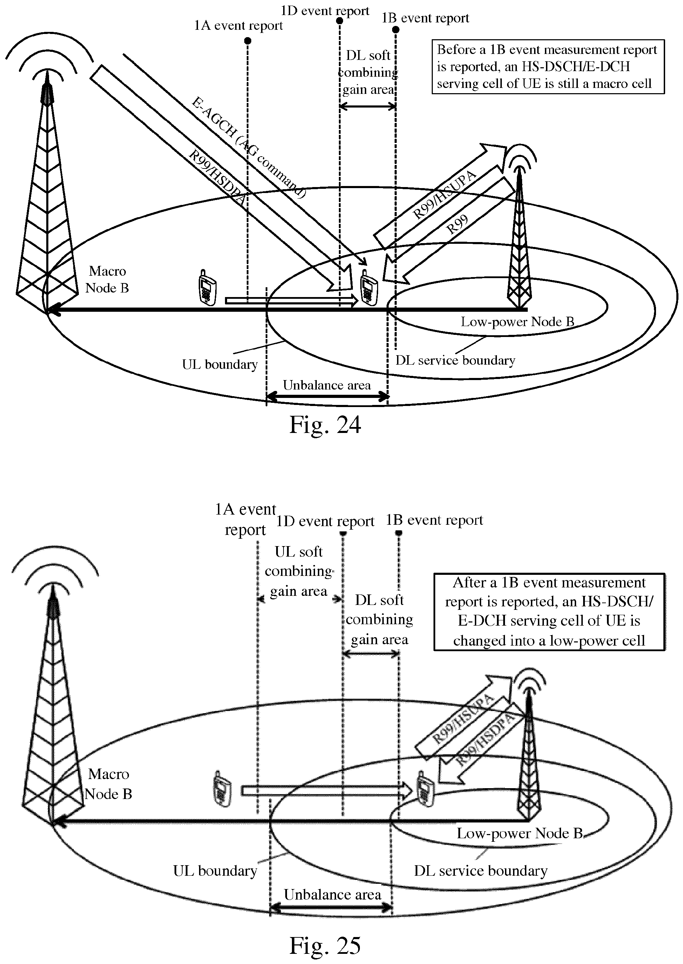

By the processing flow shown in Fig. 17, the UL service of the UE is received only by the low-power cell, but the UE receives the UL AG from the macro cell; and both the macro cell and the low-power cell send R99 services to the UE, and the macro cell sends an HSDPA service to the UE. The macro cell is still an HS-DSCH serving cell and E-DCH serving cell of the UE, referring to a relationship, shown in Fig. 24, between the UL and DL services of the UE and each of the macro cell and the low-power cell.

In another implementation mode, when it is determined that the UE enters the low-power cell from the DL soft combining gain area, the executed soft handover strategy includes that:
the RNC sends an RL reconfiguration preparation message to the Node B of the low-power cell, the message including related information of an HS-DSCH and parameter information of an E-AGCH;
the RNC sends an RL reconfiguration preparation message to the Node B of the macro cell, the message including related information of deletion of the HS-DSCH;
the RNC implements a physical channel reconfiguration process and a radio bearer reconfiguration process with the UE to implement changing of the HS-DSCH serving cell and the E-DCH serving cell into the low-power cell; and
the RNC sends a new measurement control message to the UE, wherein an R1a parameter and H1a parameter of the event measurement report are modified in the new measurement control message to enable the UE to report the corresponding 1A event measurement report on a DL service boundary between the macro cell and the low-power cell.

Descriptions will be given below with an example.

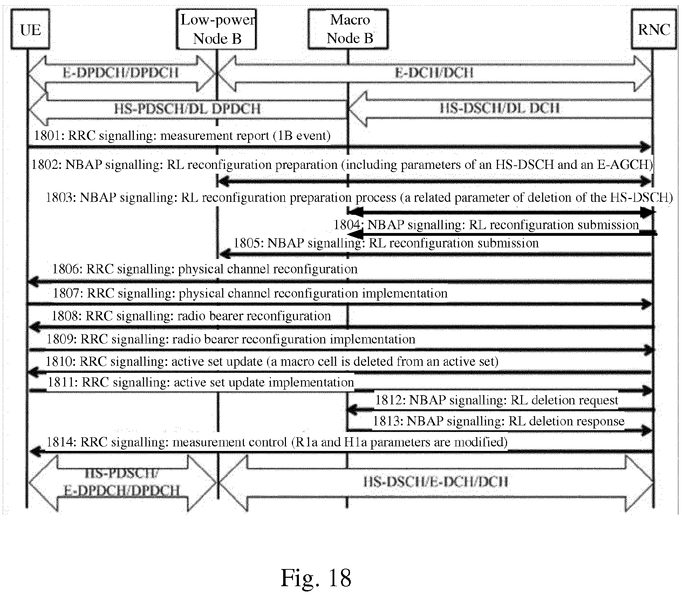

A processing flow of triggering the 1B event measurement report during movement of the UE from the macro cell to the low-power cell, as shown in Fig. 18, mainly includes:
Step 1801: the UE reports the 1B event measurement report to the RNC when the UE passes through a 1B event report boundary shown in Fig. 22 in the process of continuing moving to the low-power cell after the processing flow shown in Fig. 17;
Step 1802: the RNC initiates an RL reconfiguration process to the low-power Node B, wherein the RL reconfiguration preparation message includes the related information of the HS-DSCH and the parameter information of the E-AGCH, so that the RL of the low-power cell supports processing and transmission of the HS-DSCH and transmission of the E-AGCH;
Step 1803: the RNC initiates an RL reconfiguration process to the macro cell, wherein the RL reconfiguration preparation message includes a related parameter of deletion of the HS-DSCH;
Step 1804∼1805: the RNC sends an RL reconfiguration submission message to the macro cell and the low-power cell respectively;
Step 1806∼1809: the RNC implements a physical channel reconfiguration process and a radio bearer reconfiguration process with the UE to implement changing of the HS-DSCH serving cell and the E-DCH serving cell into the low-power cell;
Step 1810∼1813: the RNC initiates an active set update message to the UE to delete the macro cell from the active set, and the RNC initiates an RL deletion process to the macro cell; and
Step 1814: the RNC sends a new measurement control message to the UE, a parameter such as thresholds R1a and H1a in the 1A event measurement report being modified in the measurement control message to enable the UE to report the 1A event measurement report on a DL service boundary between the macro cell and the low-power cell, wherein setting of the parameter such as the thresholds R1a and H1a in the 1A event measurement report is determined according to different cell soft handover area extension methods.

It is important to note that the thresholds of the 1A event measurement report are modified in a manner that R1a=0 and H1a is set according to a practical condition (under the principle of avoiding frequent Ping-Pong soft handover) when only the CIO is adopted to extend the soft handover area (for example, in Fig. 2).

When the low-power cell extends the soft handover area also by adopting pilot enhancement (for example, pilot power in Fig. 3 is enhanced by Delta dB), the thresholds of the 1A event measurement report are modified in a manner that R1a=Delta and H1a is set according to a practical condition (under the principle of avoiding frequent Ping-Pong soft handover).

By the processing flow shown in Fig. 18, the UE only forms the RL relationship with the low-power cell, and the UL and DL services are all processed by the low-power cell, referring to a relationship, shown in Fig. 25, between the UL and DL services of the UE and each of the macro cell and the low-power cell.

In another implementation mode, when it is determined that the UE enters the DL soft combining gain area from the low-power cell, the executed soft handover strategy includes that:
the RNC sends an RL establishment request message to the Node B of the macro cell, the message including a parameter which invalidates an UL E-DPDCH, an E-DPCCH and an UL-DPDCH;
the RNC initiates an active set update message to the UE, and notifies the UE to add the macro cell into the active set;
the RNC sends an RL reconfiguration preparation message to the Node B of the macro cell, the message including the related information of an HS-DSCH and an AG sending parameter; the RNC further sends an RL reconfiguration preparation message to the Node B of the low-power cell, the message including an AG forwarding parameter and related information of deletion of the HS-DSCH; and
the RNC initiates a physical channel reconfiguration process and a radio bearer reconfiguration process to the UE to implement a changing process of an HS-DSCH serving cell and an E-DCH serving cell into the macro cell.

Descriptions will be given below with an example.

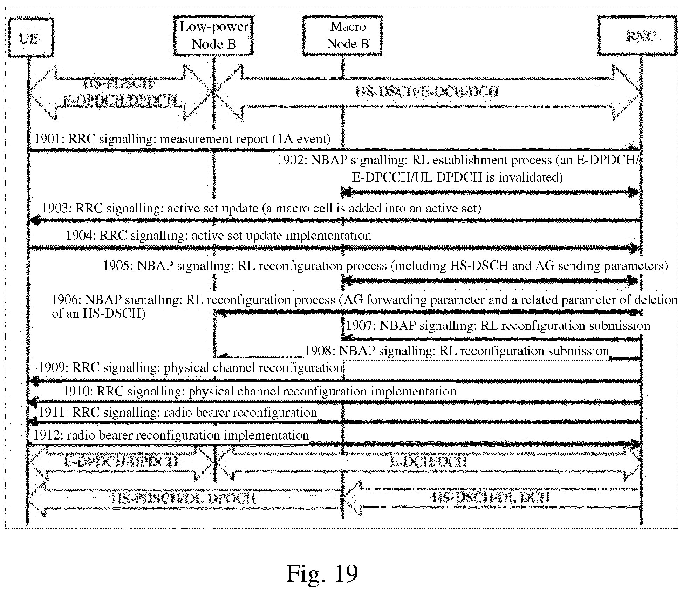

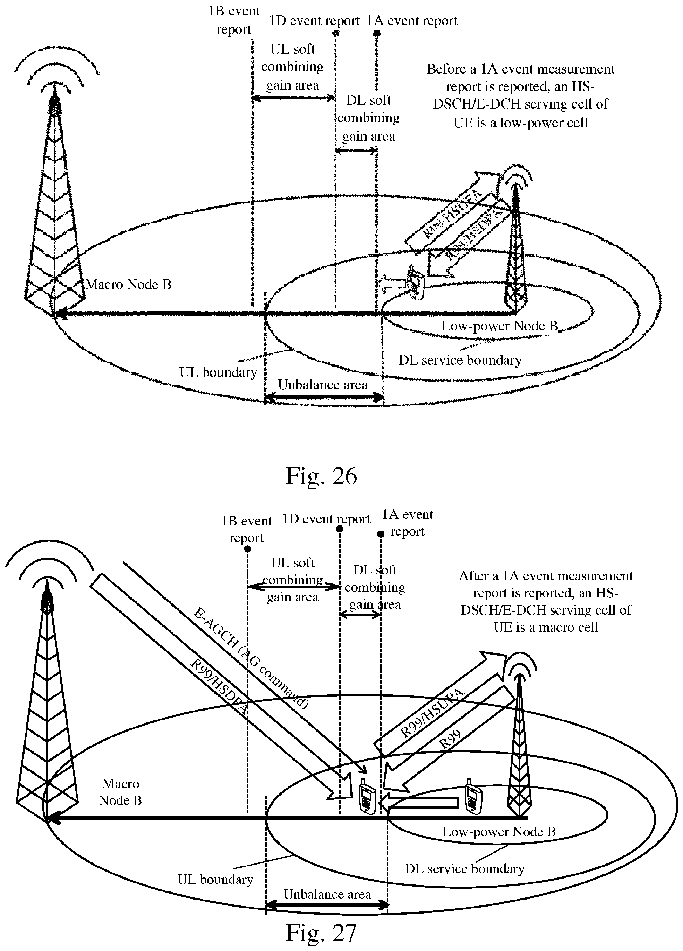

Under an initial condition, the UE only forms a UL and DL service connection with the macro cell, and there is no UL and DL service connection formed between the UE and the low-power cell, as shown in Fig. 26; if the UE does not move from the macro cell to the low-power cell, Step 1814 is also required to be executed, that is, the RNC sends the new measurement control message to the UE, the parameter such as the thresholds R1a and H1a of the 1A event measurement report being modified in the measurement control message to enable the UE to report the 1A event measurement report on a DL service boundary between the macro cell and the low-power cell; and a processing flow of triggering the 1A event measurement report during movement of the UE from the low-power cell to the macro cell, as shown in Fig. 19, mainly includes:
Step 1901: the UE reports the 1A event measurement report to the RNC when passing through a 1A event report boundary shown in Fig. 26 in a process of movement from the low-power cell to the macro cell;
Step 1902: the RNC initiates an RL establishment process to the macro cell, wherein the RL establishment request message includes the parameter which invalidates the UL E-DPDCH/E-DPCCH/UL DPDCH, so that the RL reconfigured by the macro Node B does not receive and process any UL E-DPDCH/E-DPCCH/UL DPDCH signal;
Step 1903: the RNC initiates an active set update process to the UE, and notifies the UE to add the macro cell into the active set;
Step 1904: the UE adds the macro cell into the active set, and returns an active set update implementation message to the RNC;
Step 1905∼1906: the RNC initiates an RL reconfiguration process to the macro cell, wherein the RL reconfiguration preparation message includes related information of an HS-DSCH and a AG sending parameter;
   the RNC further initiates an RL reconfiguration process to the low-power cell, wherein the RL reconfiguration preparation message includes the AG forwarding parameter and the related parameter of deletion of the HS-DSCH;
Step 1907∼1908: the RNC sends an RL reconfiguration submission message to the macro cell and the low-power cell respectively; and
Step 1909∼1912: the RNC initiates a physical channel reconfiguration process and a radio bearer reconfiguration process to the UE to implement the changing process of an HS-DSCH serving cell and an E-DCH serving cell into the macro cell.

By the processing flow shown in Fig. 19, the UL service of the UE is received only by the low-power cell, but the UE receives the UL AG from the macro cell; and both the macro cell and the low-power cell send the R99 services to the UE, and the macro cell sends the HSDPA service to the UE, so that the HS-DSCH serving cell and the E-DCH serving cell are changed into the macro cell, referring to a relationship, shown in Fig. 27, between the UL and DL services of the UE and each of the macro cell and the low-power cell.

In another implementation mode, when it is determined that the UE enters the UL soft combining gain area from the DL soft combining gain area, the executed soft handover strategy includes that:
the RNC sends an RL reconfiguration preparation message to the Node B of the low-power cell, the message including a parameter which invalidates the DL DPDCH;
the RNC sends an RL reconfiguration preparation message to the Node B of the macro cell, the message including a parameter which validates the UL E-DPDCH, the E-DPCCH and the UL DPDCH; and
the RNC sends a new measurement control message to the UE, wherein an R1b parameter and an H1b parameter of the event measurement report are modified in the new measurement control message to enable the UE to report a corresponding 1B event measurement report on a DL service boundary between the macro cell and the low-power cell.

Descriptions will be given below with an example.

A processing flow of triggering the 1D event measurement report during movement of the UE from the low-power cell to the macro cell, as shown in Fig. 20, mainly includes:
Step 2001: the UE reports the 1D event measurement report to the RNC when the UE passes through a 1D event report boundary shown in Fig. 26 in the process of continuing moving to the macro cell after the processing flow shown in Fig. 19;
Step 2002: the RNC initiates an RL reconfiguration process to the low-power Node B, wherein the RL reconfiguration preparation message includes the parameter which invalidates the DL DPDCH, so that an RL established by the low-power cell does not send any DPDCH data to the UE;
Step 2003: the RNC sends an RL reconfiguration submission message to the low-power Node B;
Step 2004: the RNC initiates an RL reconfiguration process to the macro Node B, wherein the RL reconfiguration preparation message includes the parameter which invalidates the UL E-DPDCH/E-DPCCH/UL DPDCH;
Step 2005: the RNC sends an RL reconfiguration submission message to the macro cell, so that the UL signal of the UE is received through the RL established by the macro cell; and
Step 2006: the RNC sends a new measurement control message to the UE, the parameter such as the thresholds R1b and H1b of the 1B event measurement report being modified in the measurement control message to enable the UE to report the 1B event measurement report on a DL service boundary between the macro cell and the low-power cell.

Setting of the parameter such as the thresholds R1b and H1b of the 1B event measurement report is determined according to different cell soft handover area extension methods.

It is important to note that the thresholds of the 1B event measurement report are modified in a manner that R1b=DU-CIO (wherein DU is a link signal difference between a UL boundary and DL boundary between the macro cell and the low-power cell and CIO is a CIO parameter of the low-power cell) and H1b is set according to a practical condition (under the principle of avoiding frequent Ping-Pong soft handover) when only the CIO is adopted to extend the soft handover area (for example, in Fig. 2).

When the low-power cell extends the soft handover area by adopting the CIO and pilot enhancement (for example, pilot power in Fig. 3 is enhanced by Delta dB), the thresholds of the 1B event measurement report are modified in a manner that R1b=DU-CIO-Delta (wherein DU is the link signal difference between the UL boundary and DL boundary between the macro cell and the low-power cell) and H1b is set according to a practical condition (under the principle of avoiding frequent Ping-Pong soft handover).

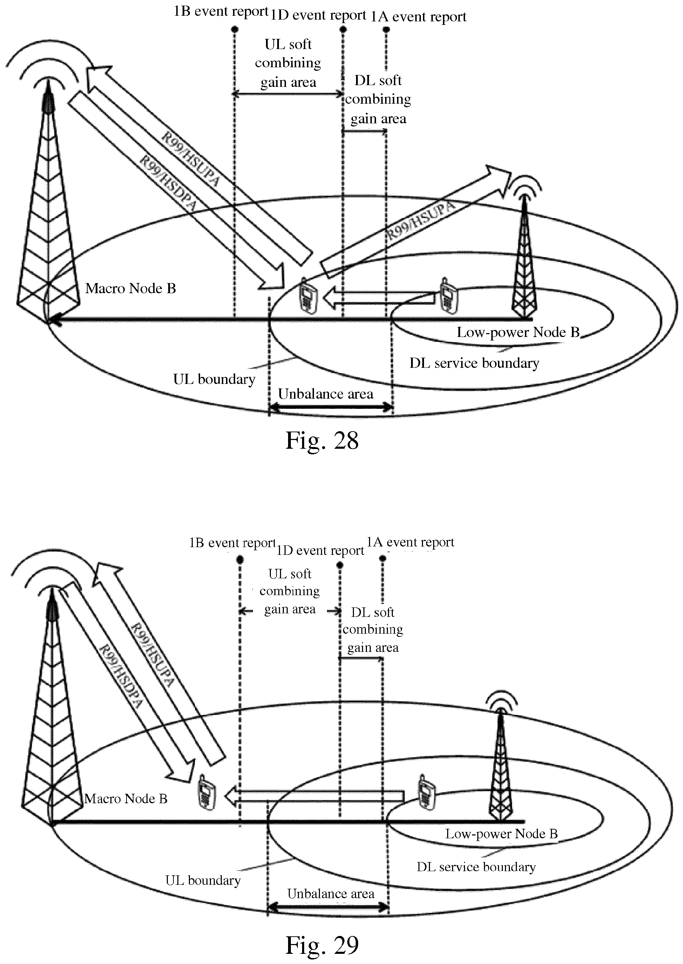

By the processing flow shown in Fig. 20, the UL service of the UE is received by both the macro cell and the low-power cell, and is finally subjected to soft combination processing, the UE only receives the DL service of the macro cell, and the low-power cell does not send any DL service to the UE, referring to a relationship, shown in Fig. 28, between the UL and DL services of the UE and each of the macro cell and the low-power cell.

In another implementation mode, when it is determined that the UE enters the macro cell from the UL soft combining gain area, the executed soft handover strategy includes that:
the RNC sends an active set update message to the UE, and notifies the UE to delete the low-power cell from the active set; and
the RNC sends a Radio Link (RL) deletion message to the UE to delete the RL between the UE and the low-power cell.

Descriptions will be given below with an example.

A processing flow of triggering the 1B event measurement report during movement of the UE from the low-power cell to the macro cell, as shown in Fig. 21, mainly includes:
Step 2101: the UE reports the 1B event measurement report to the RNC when the UE passes through a 1B event report boundary shown in Fig. 26 in the process of continuing moving to the macro cell after the processing flow shown in Fig. 20;
Step 2102∼2103: the RNC initiates an active set update process to the UE (the low-power cell is deleted from the active set), and the UE returns an active set update implementation message to the RNC; and
Step 2104∼2105: the RNC initiates an RL deletion process to the UE, and the UE returns an RL deletion response to the RNC.

By the processing flow shown in Fig. 21, the UE only forms an RL relationship with the macro cell, and the UL and DL services are all processed by the macro cell, referring to a relationship, shown in Fig. 29, between the UL and DL services of the UE and each of the macro cell and the low-power cell.

The embodiment of the present disclosure further provides a soft handover processing device, which includes:
a receiving component, configured to receive an event measurement report reported by UE; and
a processing component, configured to, when it is determined that the UE enters the UL soft combining gain area from the macro cell, enters the DL soft combining gain area from the UL soft combining gain area, enters the low-power cell from the DL soft combining gain area, enters the DL soft combining gain area from the low-power cell, enters the UL soft combining gain area from the DL soft combining gain area or enters the macro cell from the UL soft combining gain area according to the event measurement report, execute a corresponding soft handover strategy respectively.

In an implementation mode, when the processing component determines that the UE enters the UL soft combining gain area from the macro cell, the executed soft handover strategy includes that:
an RL establishment request message is sent to a Node B of the low-power cell, the message including a parameter which invalidates a DL DPDCH; and
an active set update process is initiated to the UE, and the UE is notified to add the low-power cell into an active set.

In an implementation mode, when the processing component determines that the UE enters the DL soft combining gain area from the UL soft combining gain area, the executed soft handover strategy includes that:
an RL reconfiguration preparation message is sent to the Node B of the low-power cell, the message including a parameter which validates the DL DPDCH and notification about forwarding an AG;
an RL reconfiguration preparation message is sent to a Node B of the macro cell, the message including a parameter which is configured to send the AG and a parameter which invalidates a UL E-DPDCH, an E-DPCCH and a UL DPDCH; and
a new measurement control message is sent to the UE, wherein an R1b parameter and an H1b parameter of the event measurement report are modified in the new measurement control message to enable the UE to report a corresponding 1B event measurement report when moving to a DL service boundary between the macro cell and the low-power cell.

If the soft handover area is extended by adopting a Cell Individual Offset (CIO), the R1b parameter is modified to be 0; and if the soft handover area is extended by adopting the CIO in combination with pilot enhancement, the R1b parameter is modified to be Delta, Delta being an increment of transmitted power of a P-CPICH.

In an implementation mode, when the processing component determines that the UE enters the low-power cell from the DL soft combining gain area, the executed soft handover strategy includes that:
an RL reconfiguration preparation message is sent to the Node B of the low-power cell, the message including related information of an HS-DSCH and parameter information of an E-AGCH;
an RL reconfiguration preparation message is sent to the Node B of the macro cell, the message including related information of deletion of the HS-DSCH;
a physical channel reconfiguration process and a radio bearer reconfiguration process are implemented with the UE to implement changing of the HS-DSCH serving cell and the E-DCH serving cell into the low-power cell; and
a new measurement control message is sent to the UE, wherein an R1a parameter and H1a parameter of the event measurement report are modified in the new measurement control message to enable the UE to report a corresponding 1A event measurement report on a DL service boundary between the macro cell and the low-power cell.

If the soft handover area is extended by adopting a CIO, the R1a parameter is modified to be 0; and if the soft handover area is extended by adopting the CIO in combination with pilot enhancement, the R1a parameter is modified to be Delta, wherein the Delta is increment of transmitted power of a P-CPICH.

In an implementation mode, when the processing component determines that the UE enters the DL soft combining gain area from the low-power cell, the executed soft handover strategy includes that:
an RL establishment request message is sent to the Node B of the macro cell, the message including a parameter which invalidates an UL E-DPDCH, an E-DPCCH and an UL-DPDCH;
an active set update message is initiated to the UE, and the UE is notified to add the macro cell into the active set;
an RL reconfiguration preparation message is sent to the Node B of the macro cell, the message including related information of an HS-DSCH and an AG sending parameter; the RNC further sends an RL reconfiguration preparation message to the Node B of the low-power cell, the message including an AG forwarding parameter and related information of deletion of the HS-DSCH; and
a physical channel reconfiguration process and a radio bearer reconfiguration process are initiated to the UE to implement a changing process of an HS-DSCH serving cell and an E-DCH serving cell into the macro cell.

In an implementation mode, when the processing component determines that the UE enters the UL soft combining gain area from the DL soft combining gain area, the executed soft handover strategy includes that:
an RL reconfiguration preparation message is sent to the Node B of the low-power cell, the message including a parameter which invalidates the DL DPDCH;
an RL reconfiguration preparation message is sent to the Node B of the macro cell, the message including a parameter which validates the UL E-DPDCH, the E-DPCCH and the UL DPDCH; and
a new measurement control message is sent to the UE, wherein an R1b parameter and an H1b parameter of the event measurement report are modified in the new measurement control message to enable the UE to report a corresponding 1B event measurement report on a DL service boundary between the macro cell and the low-power cell.

If the soft handover area is extended by adopting a CIO, the R1b parameter is modified to be DU-CIO; if the soft handover area is extended by adopting the CIO in combination with pilot enhancement, the R1b parameter is modified to be DU-CIO-Delta; and DU is a link signal difference between a UL boundary and DL boundary between the macro cell and the low-power cell, CIO is a CIO parameter of the low-power cell, and Delta is increment of transmitted power of a P-CPICH.

In an implementation mode, when the processing component determines that the UE enters the macro cell from the UL soft combining gain area, the executed soft handover strategy includes that:
an active set update message is sent to the UE, and the UE is notified to delete the low-power cell from the active set; and
an RL deletion message is sent to the UE to delete an RL between the UE and the low-power cell.

It is important to note that the receiving component in the embodiment may be implemented by a communication function chip of the soft handover processing device, and the processing component may be implemented by a Central Processing Unit (CPU), Micro Processing Unit (MPU), Digital Signal Processor (DSP) or Field-Programmable Gate Array (FPGA) in the soft handover processing device.

The embodiment of the present disclosure further provides a computer-readable storage medium, which includes a set of computer-executable instructions, the instructions being configured to execute the soft handover processing method of the embodiment of the present disclosure.

In the embodiments provided by the present disclosure, it should be understood that the disclosed method, device and electronic equipment may be implemented in other manners. The equipment embodiment described above is only schematic, and for example, division of the units is only logical function division, and other division manners may be adopted during practical implementation, for example: multiple units or components may be combined, or may be integrated to another system, or some characteristics may be neglected, or may not be executed.

In addition, each function unit in each embodiment of the present disclosure may be integrated in a processing unit, each unit may also serve as an independent unit, and two or more than two units may also be integrated in a unit; and the integrated unit may be implemented in form of hardware, and may also be implemented in form of combination of hardware and software function units.

Those skilled in the art should know that: all or part of steps implementing the method embodiment may be implemented by related hardware instructed by a program, the program may be stored in a computer-readable storage medium, and when the program is executed, the steps of the method embodiment are executed; and the storage medium includes: various media capable of storing program codes such as mobile storage equipment, a Read-Only Memory (ROM), a Random Access Memory (RAM), a magnetic disk and a compact disc.

Or, when being implemented in form of software function component and sold or used as an independent product, the integrated unit may also be stored in a computer-readable storage medium. Based on such understanding, the technical solutions of the embodiment of the present disclosure essentially or parts making contributions to a conventional art may be embodied in form of software product, and the computer software product is stored in a storage medium, including a plurality of instructions configured to enable a piece of computer equipment (which may be a personal computer, a server, network equipment or the like) to execute all or part of the method in each embodiment of the present disclosure. The storage medium includes: various media capable of storing program codes such as mobile storage equipment, a ROM, a RAM, a magnetic disk or a compact disc.

The above is only the preferred embodiment of the present disclosure and not intended to limit the scope of protection of the present disclosure.

## Claims

1. A soft handover processing method, wherein an extended soft handover area between a macro cell and a low-power cell is divided into an Uplink, UL, soft combining gain area and a Downlink, DL, soft combining gain area, in the soft handover area, an User Equipment, UE, have Radio Links, RLs, with the macro cell and the low-power cell simultaneously, and the method comprises:
receiving (001), by a Radio Network Controller, RNC, an event measurement report reported by the UE; and
when it is determined that the UE enters the UL soft combining gain area from the macro cell, enters (002) the DL soft combining gain area from the UL soft combining gain area, enters the low-power cell from the DL soft combining gain area, enters the DL soft combining gain area from the low-power cell, enters the UL soft combining gain area from the DL soft combining gain area or enters the macro cell from the UL soft combining gain area according to the event measurement report, executing a corresponding soft handover strategy respectively;
wherein the soft handover area is extended by following: regulating a Cell Individual Offset, CIO, of the low-power cell, enhancing transmitted power of a P-CPICH of the low-power cell and enhancing transmitted power of a broadcast channel of the low-power cell, so that a boundary, close to a macro Node B side, of the soft handover area is the same as a UL boundary of an unbalance area, an unbalance area being an area where the macro cell pilot power received by UE in the UL boundary is DU, dB, higher than the low-power pilot received from the low power cell, or, an area where the transmitted signal power, received by the low-power cell, of the UE in the DL boundary is DU, dB, higher than transmitted signal power, received by the macro cell, of the UE in the DL boundary, the UL boundary referring to a boundary location where UL path loss from UE to a macro cell is equal to the UL path loss from the UE to a low-power cell and a DL boundary referring to a boundary location where a macro cell pilot and a low-power cell pilot received by the UE are equal, or, regulating a CIO of a low-power cell, enhancing transmitted power of a Primary Common Pilot Channel, P-CPICH, of the low-power cell and enhancing transmitted power of a broadcast channel of a cell of a low-power Node B, so that the soft handover area includes the UL boundary of the unbalance area.

2. The soft handover processing method as claimed in claim 1, wherein, when it is determined that the UE enters the UL soft combining gain area from the macro cell, the executed soft handover strategy comprises:
sending, by the RNC, a Radio Link, RL, establishment request message to a Node B of the low-power cell, wherein the RL establishment request message comprises a parameter which invalidates a DL Dedicated Physical Data Channel, DPDCH; and
initiating, by the RNC, an active set update process to the UE to notify the UE to add the low-power cell into an active set.

3. The soft handover processing method as claimed in claim 1, wherein, when it is determined that the UE enters the DL soft combining gain area from the UL soft combining gain area, the executed soft handover strategy comprises:
sending, by the RNC, a Radio Link, RL, reconfiguration preparation message to a Node B of the low-power cell, wherein the RL reconfiguration preparation message comprises a parameter which validates a DL Dedicated Physical Data Channel, DPDCH, and notification about forwarding of an Absolute Grant, AG, for th eUE to the macro cell;
sending, by the RNC, an RL reconfiguration preparation message to a Node B of the macro cell, wherein the RL reconfiguration preparation message comprises a parameter which configures to send the AG to the UE and a parameter which invalidates a UL Enhanced Dedicated Channel, E-DCH, Dedicated Physical Data Channel, E-DPDCH, an E-DCH Dedicated Physical Control Channel, E-DPCCH, and a UL Dedicated Physical Data Channel, DPDCH; and
sending, by the RNC, a new measurement control message to the UE, wherein an R1b parameter and an H1b parameter of the event measurement report are modified in the new measurement control message to enable the UE to report a corresponding 1B event measurement report when moving to a DL service boundary between the macro cell and the low-power cell, wherein the UL boundary refers to a boundary location where UL path loss from UE to a macro cell is equal to UL path loss from the UE to a low-power cell.

4. The soft handover processing method as claimed in claim 3, wherein
if the soft handover area is extended by adopting a Cell Individual Offset, CIO, the R1b parameter is modified to be 0; and
if the soft handover area is extended by adopting the CIO in combination with pilot enhancement, the R1b parameter is modified to be Delta, wherein the Delta is an increment of transmitted power of a Primary Common Pilot Channel, P-CPICH.

5. The soft handover processing method as claimed in claim 1, wherein, when it is determined that the UE enters the low-power cell from the DL soft combining gain area, the executed soft handover strategy comprises:
sending, by the RNC, a Radio Link, RL, reconfiguration preparation message to a Node B of the low-power cell, wherein the RL reconfiguration preparation message comprises related information of a High Speed Downlink Shared Channel, HS-DSCH, and parameter information of an E-DCH Absolute Grant Channel, E-AGCH;
sending, by the RNC, an RL reconfiguration preparation message to a Node B of the macro cell, wherein the RL reconfiguration preparation message comprises related information of deletion of the HS-DSCH;
implementing, by the RNC, a physical channel reconfiguration process and a radio bearer reconfiguration process with the UE to implement changing of an HS-DSCH serving cell and an E-DCH serving cell into the low-power cell; and
sending, by the RNC, a new measurement control message to the UE, wherein an R1a parameter and H1a parameter of the event measurement report are modified in the new measurement control message to enable the UE to report a corresponding 1A event measurement report on a DL service boundary between the macro cell and the low-power cell.

6. The soft handover processing method as claimed in claim 5, wherein
if the soft handover area is extended by adopting a Cell Individual Offset, CIO, the R1a parameter is modified to be 0; and
if the soft handover area is extended by adopting the CIO in combination with pilot enhancement, the R1a parameter is modified to be Delta, wherein the Delta is increment of transmitted power of a Primary Common Pilot Channel, P-CPICH.

7. The soft handover processing method as claimed in claim 1, wherein, when it is determined that the UE enters the DL soft combining gain area from the low-power cell, the executed soft handover strategy comprises:
sending, by the RNC, a Radio Link, RL, establishment request message to a Node B of the macro cell, wherein the RL establishment request message comprises a parameter which invalidates a UL Enhanced Dedicated Channel, E-DCH, Dedicated Physical Data Channel, E-DPDCH, an E-DCH Dedicated Physical Control Channel, E-DPCCH, and a UL Dedicated Physical Data Channel, DPDCH;
initiating, by the RNC, an active set update message to the UE to notify the UE to add the macro cell into an active set;
sending, by the RNC, an RL reconfiguration preparation message to a Node B of the macro cell, wherein the RL reconfiguration preparation message comprises related information of a High Speed Downlink Shared Channel, HS-DSCH, and an Absolute Grant, AG, sending parameter; further sending, by the RNC, an RL reconfiguration preparation message to a Node B of the low-power cell, wherein the RL reconfiguration preparation message comprises an AG forwarding parameter and related information of deletion of the HS-DSCH; and
initiating, by the RNC, a physical channel reconfiguration process and a radio bearer reconfiguration process to the UE to implement a changing process of an HS-DSCH serving cell and an E-DCH serving cell into the macro cell.

8. The soft handover processing method as claimed in claim 1, wherein, when it is determined that the UE enters the UL soft combining gain area from the DL soft combining gain area, the executed soft handover strategy comprises:
sending, by the RNC, a Radio Link, RL, reconfiguration preparation message to a Node B of the low-power cell, wherein the RL reconfiguration preparation message comprises a parameter which invalidates a DL Dedicated Physical Data Channel, DPDCH;
sending, by the RNC, an RL reconfiguration preparation message to a Node B of the macro cell, wherein the RL reconfiguration preparation message comprises a parameter which validates a UL Enhanced Dedicated Channel, E-DCH, Dedicated Physical Data Channel, E-DPDCH, an E-DCH Dedicated Physical Control Channel, E-DPCCH, and a UL Dedicated Physical Data Channel, DPDCH; and
sending, by the RNC, a new measurement control message to the UE, wherein an R1b parameter and an H1b parameter of the event measurement report are modified in the new measurement control message to enable the UE to report a corresponding 1B event measurement report on a DL service boundary between the macro cell and the low-power cell.

9. The soft handover processing method as claimed in claim 8, wherein
if the soft handover area is extended by adopting a Cell Individual Offset, CIO, the R1b parameter is modified to be DU-CIO;
if the soft handover area is extended by adopting the CIO in combination with pilot enhancement, the R1b parameter is modified to be DU-CIO-Delta; and
DU is a link signal difference between a UL boundary and DL boundary between the macro cell and the low-power cell, CIO is a CIO parameter of the low-power cell, and Delta is increment of transmitted power of a Primary Common Pilot Channel, P-CPICH.

10. The soft handover processing method as claimed in claim 1, wherein, when it is determined that the UE enters the macro cell from the UL soft combining gain area, the executed soft handover strategy comprises:
sending, by the RNC, an active set update message to the UE to notify the UE to delete the low-power cell from an active set; and
sending, by the RNC, a Radio Link, RL, deletion message to the UE to delete an RL between the UE and the low-power cell.

11. A soft handover processing device, wherein an extended soft handover area between a macro cell and a low-power cell is divided into an Uplink, UL, soft combining gain area and a Downlink, DL, soft combining gain area, in the soft handover area, an User Equipment, UE, have Radio Links, RLs, with the macro cell and the low-power cell simultaneously, and the device comprises:
a receiving component, configured to receive an event measurement report reported by the UE; and
a processing component, configured to, when it is determined that the UE enters the UL soft combining gain area from the macro cell, enters the DL soft combining gain area from the UL soft combining gain area, enters the low-power cell from the DL soft combining gain area, enters the DL soft combining gain area from the low-power cell, enters the UL soft combining gain area from the DL soft combining gain area or enters the macro cell from the UL soft combining gain area according to the event measurement report, execute a corresponding soft handover strategy respectively;
wherein the soft handover area is extended by following: regulating a Cell Individual Offset, CIO, of the low-power cell, enhancing transmitted power of a P-CPICH of the low-power cell and enhancing transmitted power of a broadcast channel of the low-power cell, so that a boundary, close to a macro Node B side, of the soft handover area is the same as a UL boundary of an unbalance area, an unbalance area being an area where the macro cell pilot power received by UE in the UL boundary is DU, dB, higher than the low-power pilot received from the low power cell, or, an area where the transmitted signal power, received by the low-power cell, of the UE in the DL boundary is DU, dB, higher than transmitted signal power, received by the macro cell, of the UE in the DL boundary, the UL boundary referring to a boundary location where UL path loss from UE to a macro cell is equal to the UL path loss from the UE to a low-power cell and a DL boundary referring to a boundary location where a macro cell pilot and a low-power cell pilot received by the UE are equal, or, regulating a CIO of a low-power cell, enhancing transmitted power of a Primary Common Pilot Channel, P-CPICH, of the low-power cell and enhancing transmitted power of a broadcast channel of a cell of a low-power Node B, so that the soft handover area includes the UL boundary of the unbalance area.

12. The soft handover processing device as claimed in claim 11, wherein, when the processing component determines that the UE enters the UL soft combining gain area from the macro cell, the executed soft handover strategy comprises:
sending a Radio Link, RL, establishment request message to a Node B of the low-power cell, wherein the RL establishment request message comprises a parameter which invalidates a DL Dedicated Physical Data Channel, DPDCH; and
initiating an active set update process to the UE to notify the UE to add the low-power cell into an active set.

13. The soft handover processing device as claimed in claim 11, wherein, when the processing component determines that the UE enters the DL soft combining gain area from the UL soft combining gain area, the executed soft handover strategy comprises:
sending a Radio Link, RL, reconfiguration preparation message to a Node B of the low-power cell, wherein the RL reconfiguration preparation message comprises a parameter which validates a DL Dedicated Physical Data Channel, DPDCH, and notification about forwarding an Absolute Grant, AG, for the UE to the macro cell;
sending an RL reconfiguration preparation message to a Node B of the macro cell, wherein the RL reconfiguration preparation message comprises a parameter which configures to send the AG and a parameter which invalidates a UL Enhanced Dedicated Channel, E-DCH, Dedicated Physical Data Channel, E-DPDCH, an E-DCH Dedicated Physical Control Channel, E-DPCCH, and a UL Dedicated Physical Data Channel, DPDCH; and
sending a new measurement control message to the UE, wherein an R1b parameter and an H1b parameter of the event measurement report are modified in the new measurement control message to enable the UE to report a corresponding 1B event measurement report when moving to a DL service boundary between the macro cell and the low-power cell.

14. The soft handover processing device as claimed in claim 13, wherein
if the soft handover area is extended by adopting a Cell Individual Offset, CIO, the R1b parameter is modified to be 0; and
if the soft handover area is extended by adopting the CIO in combination with pilot enhancement, the R1b parameter is modified to be Delta, wherein the Delta is an increment of transmitted power of a Primary Common Pilot Channel, P-CPICH.

15. The soft handover processing device as claimed in claim 11, wherein, when the processing component determines that the UE enters the low-power cell from the DL soft combining gain area, the executed soft handover strategy comprises:
sending a Radio Link, RL, reconfiguration preparation message to a Node B of the low-power cell, wherein the RL reconfiguration preparation message comprises related information of a High Speed Downlink Shared Channel, HS-DSCH, and parameter information of an E-DCH Absolute Grant Channel, E-AGCH;
sending an RL reconfiguration preparation message to a Node B of the macro cell, wherein the RL reconfiguration preparation message comprises related information of deletion of the HS-DSCH;
implementing a physical channel reconfiguration process and a radio bearer reconfiguration process with the UE to implement changing of an HS-DSCH serving cell and an E-DCH serving cell into the low-power cell; and
sending a new measurement control message to the UE, wherein an R1a parameter and H1a parameter of the event measurement report are modified in the new measurement control message to enable the UE to report a corresponding 1A event measurement report on a DL service boundary between the macro cell and the low-power cell.

16. The soft handover processing device as claimed in claim 15, wherein
if the soft handover area is extended by adopting a Cell Individual Offset, CIO, the R1a parameter is modified to be 0; and
if the soft handover area is extended by adopting the CIO in combination with pilot enhancement, the R1a parameter is modified to be Delta, wherein the Delta is increment of transmitted power of a Primary Common Pilot Channel, P-CPICH.

17. The soft handover processing device as claimed in claim 11, wherein, when the processing component determines that the UE enters the DL soft combining gain area from the low-power cell, the executed soft handover strategy comprises:
sending a Radio Link, RL, establishment request message to a Node B of the macro cell, wherein the RL establishment request message comprises a parameter which invalidates a UL Enhanced Dedicated Channel, E-DCH, Dedicated Physical Data Channel, E-DPDCH, an E-DCH Dedicated Physical Control Channel, E-DPCCH, and a UL Dedicated Physical Data Channel, DPDCH;
initiating an active set update message to the UE to notify the UE to add the macro cell into an active set;
sending an RL reconfiguration preparation message to a Node B of the macro cell, wherein the RL reconfiguration preparation message comprises related information of a High Speed Downlink Shared Channel, HS-DSCH, and an Absolute Grant, AG, sending parameter; further sending, by a Radio Network Controller, RNC, an RL reconfiguration preparation message to a Node B of the low-power cell, wherein the RL reconfiguration preparation message comprises an AG forwarding parameter and related information of deletion of the HS-DSCH; and
initiating a physical channel reconfiguration process and a radio bearer reconfiguration process to the UE to implement a changing process of an HS-DSCH serving cell and an E-DCH serving cell into the macro cell.

18. The soft handover processing device as claimed in claim 11, wherein, when the processing component determines that the UE enters the UL soft combining gain area from the DL soft combining gain area, the executed soft handover strategy comprises:
sending a Radio Link, RL, reconfiguration preparation message to a Node B of the low-power cell, wherein the RL reconfiguration preparation message comprises a parameter which invalidates a DL Dedicated Physical Data Channel, DPDCH;
sending an RL reconfiguration preparation message to a Node B of the macro cell, wherein the RL reconfiguration preparation message comprises a parameter which validates a UL Enhanced Dedicated Channel, E-DCH, Dedicated Physical Data Channel, E-DPDCH, an E-DCH Dedicated Physical Control Channel, E-DPCCH, and a UL Dedicated Physical Data Channel, DPDCH; and
sending a new measurement control message to the UE, wherein an R1b parameter and an H1b parameter of the event measurement report are modified in the new measurement control message to enable the UE to report a corresponding 1B event measurement report on a DL service boundary between the macro cell and the low-power cell.

19. The soft handover processing device as claimed in claim 18, wherein
if the soft handover area is extended by adopting a Cell Individual Offset, CIO, the R1b parameter is modified to be DU-CIO;
if the soft handover area is extended by adopting the CIO in combination with pilot enhancement, the R1b parameter is modified to be DU-CIO-Delta; and
DU is a link signal difference between a UL boundary and DL boundary between the macro cell and the low-power cell, CIO is a CIO parameter of the low-power cell, and Delta is increment of transmitted power of a Primary Common Pilot Channel, P-CPICH.

20. The soft handover processing device as claimed in claim 11, wherein, when the processing component determines that the UE enters the macro cell from the UL soft combining gain area, the executed soft handover strategy comprises:
sending an active set update message to the UE to notify the UE to delete the low-power cell from an active set; and
sending a Radio Link, RL, deletion message to the UE to delete an RL between the UE and the low-power cell.

21. A computer-readable storage medium, which comprises a set of computer-executable instructions, the instructions being configured to execute the soft handover processing method as claimed in any one of claims 1 to 10.

## Patentansprüche

1. Sanftes Übergabeverarbeitungsverfahren, wobei ein erweiterter sanfter Übergabebereich zwischen einer Makrozelle und einer Energiesparzelle in dem sanften Übergabebereich in einen sanften Uplink (UL)-Kombinierungsverstärkungsbereich und einen sanften Downlink (DL)-Kombinierungsverstärkungsbereich unterteilt sind, ein Benutzergerät (UE) gleichzeitig Funkverbindungen (RL) mit der Makrozelle und der Energiesparzelle aufweist und wobei das Verfahren Folgendes umfasst:
Empfangen (001) eines Ereignismessberichts, der von dem UE berichtet wird, von einer Funknetzwerksteuerung (RNC); und
wenn bestimmt ist, dass das UE gemäß dem Ereignismessbericht in den sanften UL-Kombinierungsverstärkungsbereich von der Makrozelle eintritt, in den sanften DL-Kombinierungsverstärkungsbereich von dem sanften UL-Kombinierungsverstärkungsbereich eintritt (002), in die Energiesparzelle von dem sanften DL-Kombinierungsverstärkungsbereich eintritt, in den sanften DL-Kombinierungsverstärkungsbereich von der Energiesparzelle eintritt, in den sanften UL-Kombinierungsverstärkungsbereich von dem sanften DL-Kombinierungsverstärkungsbereich eintritt oder in die Makrozelle von dem sanften UL-Kombinierungsverstärkungsbereich eintritt, Ausführen einer jeweiligen entsprechenden sanften Übergabestrategie;
wobei der sanfte Übergabebereich durch Folgendes erweitert wird: Regulieren eines individuellen Zellversatzes (CIO) der Energiesparzelle, Verstärken von übertragener Leistung eines P-CPICH der Energiesparzelle und Verstärken von übertragener Leistung eines Rundfunkkanals der Energiesparzelle, sodass eine Grenze des sanften Übergabebereichs in der Nähe einer Seite des Makro-Node B die gleiche ist wie eine UL-Grenze eines Ungleichgewichtsbereichs, wobei der Ungleichgewichtsbereichs ein Bereich ist, in dem die Makrozellen-Pilotleistung, die von dem UE in der UL-Grenze empfangen wird, DU, dB ist, größer als der Energiesparpilot, der von der Energiesparzelle empfangen wird, oder ein Bereich, in dem die von der Energiesparzelle empfanene übertragene Signalleistung des UE in der DL-Grenze DU, db ist, größer ist als von der Makrozelle empfangene übertragene Signalleistung des UE in der DL-Grenze, wobei sich die UL-Grenze auf einen Grenzort bezieht, an dem UL-Pfadverlust vom UE zu einer Makrozelle gleich dem UL-Pfadverlust von dem UE zu einer Energiesparzelle ist, und wobei sich eine DL-Grenze auf einen Grenzort bezieht, an dem ein von dem UE empfangener Makrozellenpilot und Energiesparzellenpilot gleich sind, oder Regulieren eines CIO einer Energiesparzelle, Verstärken von übertragener Leistung eines primären gemeinsamen Pilotkanals (P-CPICH), der Energiesparzelle und Verstärken von übertragener Leistung eines Rundfunkkanals einer Zelle eines Energiespar-Node B, sodass der sanfte Übergabebereich die UL-Grenze des Ungleichgewichtsbereichs beinhaltet.

2. Sanftes Übergabeverarbeitungsverfahren nach Anspruch 1, wobei, wenn bestimmt ist, dass das UE in den sanften UL-Kombinierungsverstärkungsbereich von der Makrozelle eintritt, die ausgeführte sanfte Übergabestrategie Folgendes umfasst:
Senden einer Funkverbindungs (RL)-Aufbauanfragenachricht von der RNC an einen Node B der Energiesparzelle, wobei die RL-Aufbauanfragenachricht einen Parameter umfasst, der einen dedizierten physikalischen DL-Datenkanal (DPDCH) invalidiert; und
Starten eines Aktualisierungsprozesses des aktiven Satzes für das UE durch die RNC, um das UE zu benachrichtigen, die Energiesparzelle in einen aktiven Satz einzufügen.

3. Sanftes Übergabeverarbeitungsverfahren nach Anspruch 1, wobei, wenn bestimmt ist, dass das UE in den sanften DL-Kombinierungsverstärkungsbereich von dem sanften UL-Kombinierungsverstärkungsbereich eintritt, die ausgeführte sanfte Übergabestrategie Folgendes umfasst:
Senden einer Funkverbindungs (RL)-Neukonfigurationsvorbereitungsnachricht von der RNC an einen Node B der Energiesparzelle, wobei die RL-Neukonfigurationsvorbereitungsnachricht einen Parameter umfasst, der einen dedizierten physikalischen DL-Datenkanal (DPDCH) und eine Benachrichtigung über das Weiterleiten einer absoluten Gewährung (AG) für das UE an die Makrozelle validiert;
Senden einer RL-Neukonfigurationsvorbereitungsnachricht von der RNC an einen Node B der Makrozelle, wobei die RL-Neukonfigurationsvorbereitungsnachricht einen Parameter, der zum Senden der AG an das UE ausgelegt ist, und einen Parameter, der einen erweiterten dedizierten UL-Kanal (E-DCH) dedizierten physikalischen Datenkanal (E-DPDCH) einen dedizierten physikalischen E-DCH-Steuerkanal (E-DPCCH) und einen dedizierten physikalischen UL-Datenkanal (DPDCH) invalidiert, umfasst; und
Senden einer neuen Messungssteuerungsnachricht von der RNC an das UE, wobei ein R1b-Paramter und ein H1b-Parameter des Ereignismessberichts in der neuen Messungssteuerungsnachricht modifiziert sind, um dem UE zu ermöglichen, bei dem Übergang zu einer DL-Dienstgrenze zwischen der Makrozelle und der Energiesparzelle einen entsprechenden 1B-Ereignismessbericht zu berichten, wobei sich die UL-Grenze auf einen Grenzort bezieht, an dem UL-Pfadverlust vom UE zu einer Makrozelle gleich dem UL-Pfadverlust von dem UE zu einer Energiesparzelle ist.

4. Sanftes Übergabeverarbeitungsverfahren nach Anspruch 3, wobei wenn der sanfte Übergabebereich erweitert wird, indem ein individueller Zellversatz (CIO) angenommen wird, der R1b-Parameter auf 0 modifiziert wird; und
wenn der sanfte Übergabebereich erweitert wird, indem ein individueller Zellversatz (CIO) in Kombination mit Pilotverstärkung angenommen wird, der R1b-Parameter auf Delta modifiziert wird, wobei Delta eine Steigerung von übertragener Leistung eines primären gemeinsamen Pilotkanals (P-CPICH) ist.

5. Sanftes Übergabeverarbeitungsverfahren nach Anspruch 1, wobei, wenn bestimmt ist, dass das UE in die Energiesparzelle von dem sanften DL-Kombinierungsverstärkungsbereichs eintritt, die ausgeführte sanfte Übergabestrategie Folgendes umfasst:
Senden einer Funkverbindungs (RL)-Neukonfigurationsvorbereitungsnachricht von der RNC an einen Node B der Energiesparzelle, wobei die RL-Neukonfigurationsvorbereitungsnachricht verwandte Informationen eines gemeinsam genutzten Hochgeschwindigkeits-Downlink-Kanals (HS-DSCH) und Parameterinformationen eines absoluten Genehmigungs-E-DCH-Kanals (E-AGCH) umfasst;
Senden einer RL-Neukonfigurationsvorbereitungsnachricht von der RNC an einen Node B der Makrozelle, wobei die RL-Neukonfigurationsvorbereitungsnachricht verwandte Informationen des Löschens des HS-DSCH umfasst;
Implementieren eines Neukonfigurationsprozesses des physikalischen Kanals und eines Neukonfigurationsprozesses eines Funkträgers mit dem UE durch die RNC, um ein Verändern einer HS-DSCH-dienenden Zelle und einer E-DCH-dienenden Zelle in die Energiesparzelle zu implementieren; und
Senden einer neuen Messungssteuerungsnachricht von der RNC an das UE, wobei ein R1a-Paramter und ein H1a-Parameter des Ereignismessberichts in der neuen Messungssteuerungsnachricht modifiziert sind, um dem UE zu ermöglichen, einen entsprechenden 1A-Ereignismessbericht über eine DL-Dienstgrenze zwischen der Makrozelle und der Energiesparzelle zu berichten.

6. Sanftes Übergabeverarbeitungsverfahren nach Anspruch 5, wobei wenn der sanfte Übergabebereich erweitert wird, indem ein individueller Zellversatz (CIO) angenommen wird, der R1a-Parameter auf 0 modifiziert wird; und
wenn der sanfte Übergabebereich erweitert wird, indem ein individueller Zellversatz (CIO) in Kombination mit Pilotverstärkung angenommen wird, der R1a-Parameter auf Delta modifiziert wird, wobei Delta eine Steigerung von übertragener Leistung eines primären gemeinsamen Pilotkanals (P-CPICH) ist.

7. Sanftes Übergabeverarbeitungsverfahren nach Anspruch 1, wobei, wenn bestimmt wird, dass das UE in den sanften DL-Kombinierungsverstärkungsbereich von der Energiesparzelle eintritt, die ausgeführte sanfte Übergabestrategie Folgendes umfasst:
Senden einer Funkverbindungs (RL)-Aufbauanfragenachricht von der RNC an einen Node B der Makrozelle, wobei die RL-Aufbauanfragenachricht einen Parameter umfasst, der einen erweiterten dedizierten UL-Kanal (E-DCH) dedizierten physikalischen Datenkanal (E-DPDCH) einen dedizierten physikalischen E-DCH-Steuerkanal (E-DPCCH) und einen dedizierten physikalischen UL-Datenkanal (DPDCH) invalidiert;
Starten einer Aktualisierungsnachricht des aktiven Satzes von der RNC an das UE, um das UE zu benachrichtigen, die Makrozelle in einen aktiven Satz einzufügen;
Senden einer RL-Neukonfigurationsvorbereitungsnachricht von der RNC an einen Node B der Makrozelle, wobei die RL-Neukonfigurationsvorbereitungsnachricht verwandte Informationen eines gemeinsam genutzten Hochgeschwindigkeits-Downlink-Kanals (HS-DSCH) und eines absoluten Genehmigungs (AG)-Sendeparameters umfasst; ferner Senden einer RL-Neukonfigurationsvorbereitungsnachricht von der RNC an einen Node B der Energiesparzelle, wobei die RL-Neukonfigurationsvorbereitungsnachricht einen AG-Weiterleitungsparameter und verwandte Informationen des Löschens des HS-DSCH umfasst; und
Starten eines Neukonfigurationsprozesses des physikalischen Kanals und eines Neukonfigurationsprozesses eines Funkträgers an das UE durch die RNC, um einen Veränderungsprozess einer HS-DSCH-dienenden Zelle und einer E-DCH-dienenden Zelle in die Makrozelle zu implementieren.

8. Sanftes Übergabeverarbeitungsverfahren nach Anspruch 1, wobei, wenn bestimmt ist, dass das UE in den sanften UL-Kombinierungsverstärkungsbereich von dem sanften DL-Kombinierungsverstärkungsbereich eintritt, die ausgeführte sanfte Übergabestrategie Folgendes umfasst:
Senden einer Funkverbindungs (RL)-Neukonfigurationsvorbereitungsnachricht von der RNC an einen Node B der Energiesparzelle, wobei die RL-Neukonfigurationsvorbereitungsnachricht einen Parameter umfasst, der einen dedizierten physikalischen DL-Datenkanal (DPDCH) invalidiert;
Senden einer RL-Neukonfigurationsvorbereitungsnachricht von der RNC an einen Node B der Makrozelle, wobei die RL-Neukonfigurationsvorbereitungsnachricht einen Parameter umfasst, der einen erweiterten dedizierten UL-Kanal (E-DCH) dedizierten physikalischen Datenkanal (E-DPDCH) einen dedizierten physikalischen E-DCH-Steuerkanal (E-DPCCH) und einen dedizierten physikalischen UL-Datenkanal (DPDCH) validiert; und
Senden einer neuen Messungssteuerungsnachricht von der RNC an das UE, wobei ein R1b-Paramter und ein H1b-Parameter des Ereignismessberichts in der neuen Messungssteuerungsnachricht modifiziert sind, um dem UE zu ermöglichen, einen entsprechenden 1B-Ereignismessbericht über eine DL-Dienstgrenze zwischen der Makrozelle und der Energiesparzelle zu berichten.

9. Sanftes Übergabeverarbeitungsverfahren nach Anspruch 8, wobei wenn der sanfte Übergabebereich erweitert wird, indem ein individueller Zellversatz (CIO) angenommen wird, der R1b-Parameter auf DU-CIO modifiziert wird; und
wenn der sanfte Übergabebereich erweitert wird, indem ein individueller Zellversatz (CIO) in Kombination mit Pilotverstärkung angenommen wird, der R1b-Parameter auf DU-CIO-Delta modifiziert wird; und
DU eine Verbindungssignaldifferenz zwischen einer UL-Grenze und DL-Grenze zwischen der Makrozelle und der Energiesparzelle ist, wobei CIO ein CIO-Parameter der Energiesparzelle ist und Delta die Steigerung von übertragener Leistung eines primären gemeinsamen Pilotkanals (P-CPICH) ist.

10. Sanftes Übergabeverarbeitungsverfahren nach Anspruch 1, wobei, wenn bestimmt ist, dass das UE in die Makrozelle von dem sanften UL-Kombinierungsverstärkungsbereichs eintritt, die ausgeführte sanfte Übergabestrategie Folgendes umfasst:
Senden einer Aktualisierungsnachricht des aktiven Satzes von der RNC an das UE, um das UE zu benachrichtigen, die Energiesparzelle aus einem aktiven Satz zu löschen; und
Senden einer Funkverbindungs (RL)-Löschungsnachricht von der RNC an das UE, um eine RL zwischen dem UE und der Energiesparzelle zu löschen.

11. Sanfte Übergabeverarbeitungsvorrichtung, wobei ein erweiterter sanfter Übergabebereich zwischen einer Makrozelle und einer Energiesparzelle in dem sanften Übergabebereich in einen sanften Uplink (UL)-Kombinierungsverstärkungsbereich und einen sanften Downlink (DL)-Kombinierungsverstärkungsbereich unterteilt sind, ein Benutzergerät (UE) gleichzeitig Funkverbindungen (RL) mit der Makrozelle und der Energiesparzelle aufweist und wobei die Vorrichtung Folgendes umfasst:
eine Empfangskomponente, die zum Empfangen eines von de UE berichteten Ereignismessberichts ausgelegt ist; und
eine Verarbeitungskomponente, die,wenn bestimmt ist, dass das UE gemäß dem Ereignismessbericht in den sanften UL-Kombinierungsverstärkungsbereich von der Makrozelle eintritt, in den sanften DL-Kombinierungsverstärkungsbereich von dem sanften UL-Kombinierungsverstärkungsbereich eintritt (002), in die Energiesparzelle von dem sanften DL-Kombinierungsverstärkungsbereich eintritt, in den sanften DL-Kombinierungsverstärkungsbereich von der Energiesparzelle eintritt, in den sanften UL-Kombinierungsverstärkungsbereich von dem sanften DL-Kombinierungsverstärkungsbereich eintritt oder in die Makrozelle von dem sanften UL-Kombinierungsverstärkungsbereich eintritt, zum Ausführen einer jeweiligen entsprechenden sanften Übergabestrategie ausgelegt ist;
wobei der sanfte Übergabebereich durch Folgendes erweitert wird: Regulieren eines individuellen Zellversatzes (CIO) der Energiesparzelle, Verstärken von übertragener Leistung eines P-CPICH der Energiesparzelle und Verstärken von übertragener Leistung eines Rundfunkkanals der Energiesparzelle, sodass eine Grenze des sanften Übergabebereichs in der Nähe einer Seite des Makro-Node B die gleiche ist wie eine UL-Grenze eines Ungleichgewichtsbereichs, wobei der Ungleichgewichtsbereichs ein Bereich ist, in dem die Makrozellen-Pilotleistung, die von dem UE in der UL-Grenze empfangen wird, DU, dB ist, größer als der Energiesparpilot, der von der Energiesparzelle empfangen wird, oder ein Bereich, in dem die von der Energiesparzelle empfanene übertragene Signalleistung des UE in der DL-Grenze DU, db ist, größer ist als von der Makrozelle empfangene übertragene Signalleistung des UE in der DL-Grenze, wobei sich die UL-Grenze auf einen Grenzort bezieht, an dem UL-Pfadverlust vom UE zu einer Makrozelle gleich dem UL-Pfadverlust von dem UE zu einer Energiesparzelle ist, und wobei sich eine DL-Grenze auf einen Grenzort bezieht, an dem ein von dem UE empfangener Makrozellenpilot und Energiesparzellenpilot gleich sind, oder Regulieren eines CIO einer Energiesparzelle, Verstärken von übertragener Leistung eines primären gemeinsamen Pilotkanals (P-CPICH), der Energiesparzelle und Verstärken von übertragener Leistung eines Rundfunkkanals einer Zelle eines Energiespar-Node B, sodass der sanfte Übergabebereich die UL-Grenze des Ungleichgewichtsbereichs beinhaltet.

12. Sanfte Übergabeverarbeitungsvorrichtung nach Anspruch 11, wobei, wenn die Verarbeitungskomponente bestimmt, dass das UE in den sanften UL-Kombinierungsverstärkungsbereich von der Makrozelle eintritt, die ausgeführte sanfte Übergabestrategie Folgendes umfasst:
Senden einer Funkverbindungs (RL)-Aufbauanfragenachricht an einen Node B der Energiesparzelle, wobei die RL-Aufbauanfragenachricht einen Parameter umfasst, der einen dedizierten physikalischen DL-Datenkanal (DPDCH) invalidiert; und
Starten eines Aktualisierungsprozesses des aktiven Satzes für das UE, um das UE zu benachrichtigen, die Energiesparzelle in einen aktiven Satz einzufügen.

13. Sanfte Übergabeverarbeitungsvorrichtung nach Anspruch 11, wobei, wenn die Verarbeitungskomponente bestimmt, dass das UE in den sanften DL-Kombinierungsverstärkungsbereich von dem sanften UL-Kombinierungsverstärkungsbereich eintritt, die ausgeführte sanfte Übergabestrategie Folgendes umfasst:
Senden einer Funkverbindungs (RL)-Neukonfigurationsvorbereitungsnachricht an einen Node B der Energiesparzelle, wobei die RL-Neukonfigurationsvorbereitungsnachricht einen Parameter umfasst, der einen dedizierten physikalischen DL-Datenkanal (DPDCH) und Benachrichtigung über Weiterleiten einer absoluten Gewährung (AG) für das UE an die Makrozelle validiert;
Senden einer RL-Neukonfigurationsvorbereitungsnachricht an einen Node B der Makrozelle, wobei die RL-Neukonfigurationsvorbereitungsnachricht einen Parameter, der zum Senden der AG UE ausgelegt ist, und einen Parameter, der einen erweiterten dedizierten UL-Kanal (E-DCH) dedizierten physikalischen Datenkanal (E-DPDCH) einen dedizierten physikalischen E-DCH-Steuerkanal (E-DPCCH) und einen dedizierten physikalischen UL-Datenkanal (DPDCH) invalidiert, umfasst; und
Senden einer neuen Messungssteuerungsnachricht an das UE, wobei ein R1b-Paramter und ein H1b-Parameter des Ereignismessberichts in der neuen Messungssteuerungsnachricht modifiziert sind, um dem UE zu ermöglichen, beim Übergang zu einer DL-Dienstgrenze zwischen der Makrozelle und der Energiesparzelle einen entsprechenden IB-Ereignismessbericht zu berichten.

14. Sanfte Übergabeverarbeitungsvorrichtung nach Anspruch 13, wobei wenn der sanfte Übergabebereich erweitert wird, indem ein individueller Zellversatz (CIO) angenommen wird, der R1b-Parameter auf 0 modifiziert wird; und
wenn der sanfte Übergabebereich erweitert wird, indem ein individueller Zellversatz (CIO) in Kombination mit Pilotverstärkung angenommen wird, der R1b-Parameter auf Delta modifiziert wird, wobei Delta eine Steigerung von übertragener Leistung eines primären gemeinsamen Pilotkanals (P-CPICH) ist.

15. Sanfte Übergabeverarbeitungsvorrichtung nach Anspruch 11, wobei, wenn die Verarbeitungskomponente bestimmt, dass das UE in die Energiesparzelle von dem sanften DL-Kombinierungsverstärkungsbereichs eintritt, die ausgeführte sanfte Übergabestrategie Folgendes umfasst:
Senden einer Funkverbindungs (RL)-Neukonfigurationsvorbereitungsnachricht an einen Node B der Energiesparzelle, wobei die RL-Neukonfigurationsvorbereitungsnachricht verwandte Informationen eines gemeinsam genutzten Hochgeschwindigkeits-Downlink-Kanals (HS-DSCH) und Parameterinformationen eines absoluten Genehmigungs-E-DCH-Kanals (E-AGCH) umfasst;
Senden einer RL-Neukonfigurationsvorbereitungsnachricht an einen Node B der Makrozelle, wobei die RL-Neukonfigurationsvorbereitungsnachricht verwandte Informationen des Löschens des HS-DSCH umfasst;
Implementieren eines Neukonfigurationsprozesses des physikalischen Kanals und eines Neukonfigurationsprozesses eines Funkträgers mit dem UE, um ein Verändern einer HS-DSCH-dienenden Zelle und einer E-DCH-dienenden Zelle in die Energiesparzelle zu implementieren; und
Senden einer neuen Messungssteuerungsnachricht an das UE, wobei ein R1a-Paramter und ein H1a-Parameter des Ereignismessberichts in der neuen Messungssteuerungsnachricht modifiziert sind, um dem UE zu ermöglichen, einen entsprechenden 1A-Ereignismessbericht über eine DL-Dienstgrenze zwischen der Makrozelle und der Energiesparzelle zu berichten.

16. Sanfte Übergabeverarbeitungsvorrichtung nach Anspruch 15, wobei wenn der sanfte Übergabebereich erweitert wird, indem ein individueller Zellversatz (CIO) angenommen wird, der R1a-Parameter auf 0 modifiziert wird; und
wenn der sanfte Übergabebereich erweitert wird, indem ein individueller Zellversatz (CIO) in Kombination mit Pilotverstärkung angenommen wird, der R1a-Parameter auf Delta modifiziert wird, wobei Delta eine Steigerung von übertragener Leistung eines primären gemeinsamen Pilotkanals (P-CPICH) ist.

17. Sanfte Übergabeverarbeitungsvorrichtung nach Anspruch 11, wobei, wenn die Verarbeitungskomponente bestimmt, dass das UE in den sanften UL-Kombinierungsverstärkungsbereich von der Energiesparzelle eintritt, die ausgeführte sanfte Übergabestrategie Folgendes umfasst:
Senden einer Funkverbindungs (RL)-Aufbauanfragenachricht an einen Node B der Makrozelle, wobei die RL-Aufbauanfragenachricht einen Parameter umfasst, der einen erweiterten dedizierten UL-Kanal (E-DCH) dedizierten physikalischen Datenkanal (E-DPDCH) einen dedizierten physikalischen E-DCH-Steuerkanal (E-DPCCH) und einen dedizierten physikalischen UL-Datenkanal (DPDCH) invalidiert;
Starten einer Aktualisierungsnachricht des aktiven Satzes an das UE, um das UE zu benachrichtigen, die Makrozelle in einen aktiven Satz einzufügen;
Senden einer RL-Neukonfigurationsvorbereitungsnachricht an einen Node B der Makrozelle, wobei die RL-Neukonfigurationsvorbereitungsnachricht verwandte Informationen eines gemeinsam genutzten Hochgeschwindigkeits-Downlink-Kanals (HS-DSCH) und eines absoluten Genehmigungs (AG)-Sendeparameters umfasst; ferner Senden einer RL-Neukonfigurationsvorbereitungsnachricht von der Funknetzwerksteuerung (RNC) an einen Node B der Energiesparzelle, wobei die RL-Neukonfigurationsvorbereitungsnachricht einen AG-Weiterleitungsparameter und verwandte Informationen des Löschens des HS-DSCH umfasst; und
Starten eines Neukonfigurationsprozesses des physikalischen Kanals und eines Neukonfigurationsprozesses eines Funkträgers an das UE, um einen Veränderungsprozess einer HS-DSCH-dienenden Zelle und einer E-DCH-dienenden Zelle in die Makrozelle zu implementieren.

18. Sanfte Übergabeverarbeitungsvorrichtung nach Anspruch 11, wobei, wenn die Verarbeitungskomponente bestimmt, dass das UE in den sanften UL-Kombinierungsverstärkungsbereich von dem sanften DL-Kombinierungsverstärkungsbereich eintritt, die ausgeführte sanfte Übergabestrategie Folgendes umfasst:
Senden einer Funkverbindungs (RL)-Neukonfigurationsvorbereitungsnachricht an einen Node B der Energiesparzelle, wobei die RL-Neukonfigurationsvorbereitungsnachricht einen Parameter umfasst, der einen dedizierten physikalischen DL-Datenkanal (DPDCH) invalidiert;
Senden einer RL-Neukonfigurationsvorbereitungsnachricht an einen Node B der Makrozelle, wobei die RL-Neukonfigurationsvorbereitungsnachricht einen Parameter umfasst, der einen erweiterten dedizierten UL-Kanal (E-DCH) dedizierten physikalischen Datenkanal (E-DPDCH) einen dedizierten physikalischen E-DCH-Steuerkanal (E-DPCCH) und einen dedizierten physikalischen UL-Datenkanal (DPDCH) validiert; und
Senden einer neuen Messungssteuerungsnachricht an das UE, wobei ein R1b-Paramter und ein H1b-Parameter des Ereignismessberichts in der neuen Messungssteuerungsnachricht modifiziert sind, um dem UE zu ermöglichen, einen entsprechenden 1A-Ereignismessbericht über eine DL-Dienstgrenze zwischen der Makrozelle und der Energiesparzelle zu berichten.

19. Sanfte Übergabeverarbeitungsvorrichtung nach Anspruch 18, wobei wenn der sanfte Übergabebereich erweitert wird, indem ein individueller Zellversatz (CIO) angenommen wird, der R1b-Parameter auf DU-CIO modifiziert wird; und
wenn der sanfte Übergabebereich erweitert wird, indem ein individueller Zellversatz (CIO) in Kombination mit Pilotverstärkung angenommen wird, der R1b-Parameter auf DU-CIO-Delta modifiziert wird; und
DU eine Verbindungssignaldifferenz zwischen einer UL-Grenze und DL-Grenze zwischen der Makrozelle und der Energiesparzelle ist, wobei CIO ein CIO-Parameter der Energiesparzelle ist und Delta die Steigerung von übertragener Leistung eines primären gemeinsamen Pilotkanals (P-CPICH) ist.

20. Sanfte Übergabeverarbeitungsvorrichtung nach Anspruch 11, wobei, wenn die Verarbeitungskomponente bestimmt, dass das UE in die Makrozelle von dem sanften DL-Kombinierungsverstärkungsbereichs eintritt, die ausgeführte sanfte Übergabestrategie Folgendes umfasst:
Senden einer Aktualisierungsnachricht des aktiven Satzes an das UE, um das UE zu benachrichtigen, die Energiesparzelle aus einem aktiven Satz zu löschen; und
Senden einer Funkverbindungs (RL)-Löschungsnachricht an das UE, um eine RL zwischen dem UE und der Energiesparzelle zu löschen.

21. Computerlesbares Speichermedium, das einen Satz von computerausführbaren Anweisungen umfasst, wobei die Anweisungen zum Ausführen des sanften Übergangeverarbeitungsverfahrens nach einem der Ansprüche 1 bis 10 ausgelegt sind.

## Revendications

1. Procédé de traitement de transfert intercellulaire sans coupure, dans lequel une région de transfert intercellulaire sans coupure étendue entre une macro-cellule et une cellule de faible puissance est divisée dans une région de gain de combinaison sans coupure de liaison montante (UL) et une région de gain de combinaison sans coupure de liaison descendante (DL), dans la région de transfert intercellulaire sans coupure, un équipement utilisateur (UE) a des liaisons radio (RL) avec la macro-cellule et la cellule de faible puissance simultanément, et le procédé comprend :
la réception (001), par un contrôleur de réseau radio (RNC), d'un rapport de mesure d'événement communiqué par l'UE ; et
lorsqu'il est déterminé que l'UE entre dans la région de gain de combinaison sans coupure d'UL à partir de la macro-cellule, entre (002) dans la région de gain de combinaison sans coupure de DL à partir de la région de gain de combinaison sans coupure d'UL, entre dans la cellule de faible puissance à partir de la région de gain de combinaison sans coupure de DL, entre dans la région de gain de combinaison sans coupure de DL à partir de la cellule de faible puissance, entre dans la région de gain de combinaison sans coupure d'UL à partir de la région de gain de combinaison sans coupure de DL ou entre dans la macro-cellule à partir de la région de gain de combinaison sans coupure d'UL conformément au rapport de mesure d'événement, l'exécution d'une stratégie de transfert intercellulaire sans coupure correspondante, respectivement ;
dans lequel la région de transfert intercellulaire sans coupure est étendue en appliquant : la régulation d'un décalage cellulaire individuel (CIO) de la cellule de faible puissance, l'amélioration de la puissance transmise d'un P-CPICH de cellule de faible puissance et l'amélioration de la puissance transmise d'un canal de diffusion de la cellule de faible puissance, de sorte qu'une limite, proche d'une côté du macro-noeud B, de la région de transfert intercellulaire sans coupure soit la même qu'une limite d'UL d'une région non équilibrée, une région non équilibrée étant une région où la puissance de pilote de macro-cellule reçue par l'UE dans la limite d'UL est DU (dB) supérieure au pilote de faible puissance reçu de la part de la cellule de faible puissance, ou, une région où la puissance de signal transmise, reçue par la cellule de faible puissance, de l'UE dans dans la limite de DL est DU (dB) supérieure à la puissance de signal transmise, reçue par la macro-cellule, de l'UE dans la limite de DL, la limite d'UL faisant référence à un emplacement limite où la perte de trajet d'UL de l'UE à un macro-cellule est égale à la perte de trajet d'UL de l'UE à une cellule de faible puissance et une limite de DL faisant référence à un emplacement limite où un pilote de macro-cellule et un pilote de cellule de faible puissance reçus par l'UE sont égaux, ou, la régulation d'un CIO d'une cellule de faible puissance, l'amélioration de la puissance transmise d'un canal pilote commun primaire (P-CPICH) de la cellule de faible puissance et l'amélioration de la puissance transmise d'un canal de diffusion d'une cellule d'un noeud B de faible puissance, de sorte que la région de transfert intercellulaire sans coupure inclut la limite d'UL de la région non équilibrée.

2. Procédé de traitement de transfert intercellulaire sans coupure selon la revendication 1, dans lequel, lorsqu'il est déterminé que l'UE entre dans la région de gain de combinaison sans coupure d'UL à partir de la macro-cellule, la stratégie de transfert intercellulaire sans coupure exécutée comprend :
l'envoi, par le RNC, d'un message de demande d'établissement de liaison radio (RL) à un noeud B de la cellule de faible puissance, ledit message de demande d'établissement de RL comprenant un paramètre qui invalide un canal de données physiques dédié (DPDCH) de DL ; et
l'initiation, par le RNC, d'un processus de mise à jour d'ensemble actif auprès de l'UE pour notifier à l'UE d'ajouter la cellule de faible puissance dans un ensemble actif.

3. Procédé de traitement de transfert intercellulaire sans coupure selon la revendication 1, dans lequel, lorsqu'il est déterminé que l'UE entre dans la région de gain de combinaison sans coupure de DL à partir de la région de gain de combinaison sans coupure d'UL, la stratégie de transfert intercellulaire sans coupure exécutée comprend :
l'envoi, par le RNC, d'un message de préparation de reconfiguration de liaison radio (RL) à un noeud B de la cellule de faible puissance, ledit message de préparation de reconfiguration de RL comprenant un paramètre qui valide un canal de données physiques dédié (DPDCH) de DL, et une notification concernant le transfert d'un octroi absolu (AG) pour l'UE à la macro-cellule ;
l'envoi, par le RNC, d'un message de préparation de reconfiguration de RL à un noeud B de la macro-cellule, ledit message de préparation de reconfiguration de RL comprenant un paramètre qui configure pour envoyer l'AG à l'UE et un paramètre qui invalide un canal de données physiques dédié de canal dédié amélioré (E-DCH) (E-DPDCH) d'UL, un canal de commande physique dédié d'E-DCH (E-DPCCH), et un canal de données physiques dédié (DPDCH) d'UL ; et
l'envoi, par le RNC, d'un nouveau message de commande de mesure à l'UE, un paramètre R1b et un paramètre H1b du rapport de mesure d'événement étant modifiés dans le nouveau message de commande de mesure pour permettre à l'UE de communiquer un rapport de mesure d'événement 1B correspondant lorsqu'il se déplace vers une limite de service de DL entre la macro-cellule et la cellule de faible puissance, ladite limite d'UL faisant référence à un emplacement limite où une perte de trajet d'UL de l'UE à une macro-cellule est égale à une perte de trajet d'UL de l'UE à une cellule de faible puissance.

4. Procédé de traitement de transfert intercellulaire sans coupure selon la revendication 3, dans lequel
si la région de transfert intercellulaire sans coupure est étendue en adoptant un décalage cellulaire individuel (CIO), le paramètre R1b est modifié pour être 0 ; et
si la région de transfert intercellulaire sans coupure est étendue en adoptant le CIO en combinaison avec une amélioration de pilote, le paramètre R1b est modifié pour être Delta, Delta étant un incrément de puissance transmise d'un canal pilote commun primaire (P-CPICH).

5. Procédé de traitement de transfert intercellulaire sans coupure selon la revendication 1, dans lequel, lorsqu'il est déterminé que l'UE entre dans la cellule de faible puissance à partir de la région de gain de combinaison sans coupure d'UL, la stratégie de transfert intercellulaire sans coupure exécutée comprend :
l'envoi, par le RNC, d'un message de préparation de reconfiguration de liaison radio (RL) à un noeud B de la cellule de faible puissance, ledit message de préparation de reconfiguration de RL comprenant les informations associées d'un canal partagé de liaison descendante haut débit (HS-DSCH) et les informations de paramètre d'un canal d'octroi absolu d'E-DCH (E-AGCH) ;
l'envoi, par le RNC, d'un message de préparation de reconfiguration de RL à un noeud B de la macro-cellule, ledit message de préparation de reconfiguration de RL comprenant les informations associées de suppression du HS-DSCH ;
l'implémentation, par le RNC, d'un processus de reconfiguration de canal physique et d'un processus de reconfiguration de porteuse radio avec l'UE pour implémenter le changement d'une cellule de service de HS-DSCH et d'une cellule de service d'E-DCH dans la cellule de faible puissance ; et
l'envoi, par le RNC, d'un nouveau message de commande de mesure à l'UE, un paramètre R1a et un paramètre H1a du rapport de mesure d'événement étant modifiés dans le nouveau message de commande de mesure pour permettre à l'UE de communiquer un rapport de mesure d'événement 1A correspondant sur une limite de service de DL entre la macro-cellule et la cellule de faible puissance.

6. Procédé de traitement de transfert intercellulaire sans coupure selon la revendication 5, dans lequel
si la région de transfert intercellulaire sans coupure est étendue en adoptant un décalage cellulaire individuel (CIO), le paramètre R1a est modifié pour être 0 ; et
si la région de transfert intercellulaire sans coupure est étendue en adoptant le CIO en combinaison avec une amélioration de pilote, le paramètre R1a est modifié pour être Delta, Delta étant un incrément de puissance transmise d'un canal pilote commun primaire (P-CPICH).

7. Procédé de traitement de transfert intercellulaire sans coupure selon la revendication 1, dans lequel, lorsqu'il est déterminé que l'UE entre dans la région de gain de combinaison sans coupure de DL à partir de la cellule de faible puissance, la stratégie de transfert intercellulaire sans coupure exécutée comprend :
l'envoi, par le RNC, d'un message de demande d'établissement de liaison radio (RL) à un noeud B de la macro-cellule, ledit message de demande d'établissement de RL comprenant un paramètre qui configure pour envoyer l'AG à l'UE et un paramètre qui invalide un canal de données physiques dédié de canal dédié amélioré (E-DCH) (E-DPDCH) d'UL, un canal de commande physique dédié d'E-DCH (E-DPCCH), et un canal de données physiques dédié (DPDCH) d'UL ;
l'initiation, par le RNC, d'un message de mise à jour d'ensemble actif auprès de l'UE pour notifier à l'UE d'ajouter la macro-cellule dans un ensemble actif ;
l'envoi, par le RNC, d'un message de préparation de reconfiguration de RL à un noeud B de la macro-cellule, ledit message de préparation de reconfiguration de RL comprenant les informations associées d'un canal partagé de liaison descendante haut débit (HS-DSCH) et un paramètre d'envoi d'octroi absolu (AG) ; l'envoi supplémentaire, par le RNC, d'un message de préparation de reconfiguration de RL à un noeud B de la cellule de faible puissance, ledit message de préparation de reconfiguration de RL comprenant un paramètre de transfert d'AG et les informations associées de suppression du HS-DSCH ; et
l'implémentation, par le RNC, d'un processus de reconfiguration de canal physique et d'un processus de reconfiguration de porteuse radio vers l'UE pour implémenter un processus de changement d'une cellule de service de HS-DSCH et d'une cellule de service d'E-DCH dans la macro-cellule.

8. Procédé de traitement de transfert intercellulaire sans coupure selon la revendication 1, dans lequel, lorsqu'il est déterminé que l'UE entre dans la région de gain de combinaison sans coupure d'UL à partir de la région de gain de combinaison sans coupure de DL, la stratégie de transfert intercellulaire sans coupure exécutée comprend :
l'envoi, par le RNC, d'un message de préparation de reconfiguration de liaison radio (RL) à un noeud B de la cellule de faible puissance, ledit message de préparation de reconfiguration de RL comprenant un paramètre qui invalide un canal de données physiques dédié (DPDCH) de DL ;
l'envoi, par le RNC, d'un message de préparation de reconfiguration de RL à un noeud B de la macro-cellule, ledit message de préparation de reconfiguration de RL comprenant un paramètre qui valide un canal de données physiques dédié de canal dédié amélioré (E-DCH) (E-DPDCH) d'UL, un canal de commande physique dédié d'E-DCH (E-DPCCH), et un canal de données physiques dédié (DPDCH) d'UL ; et
l'envoi, par le RNC, d'un nouveau message de commande de mesure à l'UE, un paramètre R1b et un paramètre H1b du rapport de mesure d'événement étant modifiés dans le nouveau message de commande de mesure pour permettre à l'UE de communiquer un rapport de mesure d'événement 1B correspondant sur une limite de service de DL entre la macro-cellule et la cellule de faible puissance.

9. Procédé de traitement de transfert intercellulaire sans coupure selon la revendication 8, dans lequel
si la région de transfert intercellulaire sans coupure est étendue en adoptant un décalage cellulaire individuel (CIO), le paramètre R1b est modifié pour être DU-CIO ; et
si la région de transfert intercellulaire sans coupure est étendue en adoptant le décalage cellulaire individuel (CIO) en combinaison avec une amélioration de pilote, le paramètre R1b est modifié pour être DU-CIO-Delta ; et
DU est une différence de signal de liaison entre une limite d'UL et une limite de DL entre la macro-cellule et la cellule de faible puissance, CIO est un paramètre de CIO de la cellule de faible puissance, et Delta est un incrément de puissance transmise d'un canal pilote commun primaire (P-CPICH).

10. Procédé de traitement de transfert intercellulaire sans coupure selon la revendication 1, dans lequel, lorsqu'il est déterminé que l'UE entre dans la macro-cellule à partir de la région de gain de combinaison sans coupure d'UL, la stratégie de transfert intercellulaire sans coupure exécutée comprend :
l'envoi, par le RNC, d'un message de mise à jour d'ensemble actif à l'UE pour notifier à l'UE de supprimer la cellule de faible puissance d'un ensemble actif ; et
l'envoi, par le RNC, d'un message de suppression de liaison radio (RL) à l'UE pour supprimer une RL entre l'UE et la cellule de faible puissance.

11. Procédé de traitement de transfert intercellulaire sans coupure, dans lequel une région de transfert intercellulaire sans coupure étendue entre une macro-cellule et une cellule de faible puissance est divisée dans une région de gain de combinaison sans coupure de liaison montante (UL) et une région de gain de combinaison sans coupure de liaison descendante (DL), dans la région de transfert intercellulaire sans coupure, un équipement utilisateur (UE) a des liaisons radio (RL) avec la macro-cellule et la cellule de faible puissance simultanément, et le dispositif comprend :
un composant récepteur, conçu pour recevoir un rapport de mesure d'événement communiqué par l'UE ; et
un composant de traitement, conçu pour, lorsqu'il est déterminé que l'UE entre dans la région de gain de combinaison sans coupure d'UL à partir de la macro-cellule, entre dans la région de gain de combinaison sans coupure de DL à partir de la région de gain de combinaison sans coupure d'UL, entre dans la cellule de faible puissance à partir de la région de gain de combinaison sans coupure de DL, entre dans la région de gain de combinaison sans coupure de DL à partir de la cellule de faible puissance, entre dans la région de gain de combinaison sans coupure d'UL à partir de la région de gain de combinaison sans coupure de DL ou entre dans la macro-cellule à partir de la région de gain de combinaison sans coupure d'UL conformément au rapport de mesure d'événement, exécute une stratégie de transfert intercellulaire sans coupure correspondante, respectivement ;
dans lequel la région de transfert intercellulaire sans coupure est étendue en appliquant : la régulation d'un décalage cellulaire individuel (CIO) de la cellule de faible puissance, l'amélioration de la puissance transmise d'un P-CPICH de cellule de faible puissance et l'amélioration de la puissance transmise d'un canal de diffusion de la cellule de faible puissance, de sorte qu'une limite, proche d'une côté du macro-noeud B, de la région de transfert intercellulaire sans coupure soit la même qu'une limite d'UL d'une région non équilibrée, une région non équilibrée étant une région où la puissance de pilote de macro-cellule reçue par l'UE dans la limite d'UL est DU (dB) supérieure au pilote de faible puissance reçu de la part de la cellule de faible puissance, ou, une région où la puissance de signal transmise, reçue par la cellule de faible puissance, de l'UE dans dans la limite de DL est DU (dB) supérieure à la puissance de signal transmise, reçue par la macro-cellule, de l'UE dans la limite de DL, la limite d'UL faisant référence à un emplacement limite où la perte de trajet d'UL de l'UE à un macro-cellule est égale à la perte de trajet d'UL de l'UE à une cellule de faible puissance et une limite de DL faisant référence à un emplacement limite où un pilote de macro-cellule et un pilote de cellule de faible puissance reçus par l'UE sont égaux, ou, la régulation d'un CIO d'une cellule de faible puissance, l'amélioration de la puissance transmise d'un canal pilote commun primaire (P-CPICH) de la cellule de faible puissance et l'amélioration de la puissance transmise d'un canal de diffusion d'une cellule d'un noeud B de faible puissance, de sorte que la région de transfert intercellulaire sans coupure inclut la limite d'UL de la région non équilibrée.

12. Dispositif de traitement de transfert intercellulaire sans coupure selon la revendication 11, dans lequel, lorsque le composant de traitement détermine que l'UE entre dans la région de gain de combinaison sans coupure d'UL à partir de la macro-cellule, la stratégie de transfert intercellulaire sans coupure exécutée comprend :
l'envoi d'un message de demande d'établissement de liaison radio (RL) à un noeud B de la cellule de faible puissance, ledit message de demande d'établissement de RL comprenant un paramètre qui invalide un canal de données physiques dédié (DPDCH) de DL ; et
l'initiation d'un processus de mise à jour d'ensemble actif auprès de l'UE pour notifier à l'UE d'ajouter la cellule de faible puissance dans un ensemble actif.

13. Dispositif de traitement de transfert intercellulaire sans coupure selon la revendication 11, dans lequel, lorsque le composant de traitement détermine que l'UE entre dans la région de gain de combinaison sans coupure de DL à partir de la région de gain de combinaison sans coupure d'UL, la stratégie de transfert intercellulaire sans coupure exécutée comprend :
l'envoi d'un message de préparation de reconfiguration de liaison radio (RL) à un noeud B de la cellule de faible puissance, ledit message de préparation de reconfiguration de RL comprenant un paramètre qui valide un canal de données physiques dédié (DPDCH) de DL, et une notification concernant le transfert d'un octroi absolu (AG) pour l'UE à la macro-cellule ;
l'envoi d'un message de préparation de reconfiguration de RL à un noeud B de la macro-cellule, ledit message de préparation de reconfiguration de RL comprenant un paramètre qui configure pour envoyer l'AG et un paramètre qui invalide un canal de données physiques dédié de canal dédié amélioré (E-DCH) (E-DPDCH) d'UL, un canal de commande physique dédié d'E-DCH (E-DPCCH), et un canal de données physiques dédié (DPDCH) d'UL ; et
l'envoi d'un nouveau message de commande de mesure à l'UE, un paramètre R1b et un paramètre H1b du rapport de mesure d'événement étant modifiés dans le nouveau message de commande de mesure pour permettre à l'UE de communiquer un rapport de mesure d'événement IB correspondant lorsqu'il se déplace vers une limite de service de DL entre la macro-cellule et la cellule de faible puissance.

14. Dispositif de traitement de transfert intercellulaire sans coupure selon la revendication 13, dans lequel
si la région de transfert intercellulaire sans coupure est étendue en adoptant un décalage cellulaire individuel (CIO), le paramètre R1b est modifié pour être 0 ; et
si la région de transfert intercellulaire sans coupure est étendue en adoptant le CIO en combinaison avec une amélioration de pilote, le paramètre R1b est modifié pour être Delta, Delta étant un incrément de puissance transmise d'un canal pilote commun primaire (P-CPICH).

15. Dispositif de traitement de transfert intercellulaire sans coupure selon la revendication 11, dans lequel, lorsque le composant de traitement détermine que l'UE entre dans la cellule de faible puissance à partir de la région de gain de combinaison sans coupure d'UL, la stratégie de transfert intercellulaire sans coupure exécutée comprend :
l'envoi d'un message de préparation de reconfiguration de liaison radio (RL) à un noeud B de la cellule de faible puissance, ledit message de préparation de reconfiguration de RL comprenant les informations associées d'un canal partagé de liaison descendante haut débit (HS-DSCH) et les informations de paramètre d'un canal d'octroi absolu d'E-DCH (E-AGCH) ;
l'envoi d'un message de préparation de reconfiguration de RL à un noeud B de la macro-cellule, ledit message de préparation de reconfiguration de RL comprenant les informations associées de suppression du HS-DSCH ;
l'implémentation d'un processus de reconfiguration de canal physique et d'un processus de reconfiguration de porteuse radio avec l'UE pour implémenter le changement d'une cellule de service de HS-DSCH et d'une cellule de service d'E-DCH dans la cellule de faible puissance ; et
l'envoi d'un nouveau message de commande de mesure à l'UE, un paramètre R1a et un paramètre H1a du rapport de mesure d'événement étant modifiés dans le nouveau message de commande de mesure pour permettre à l'UE de communiquer un rapport de mesure d'événement 1A correspondant sur une limite de service de DL entre la macro-cellule et la cellule de faible puissance.

16. Dispositif de traitement de transfert intercellulaire sans coupure selon la revendication 15, dans lequel
si la région de transfert intercellulaire sans coupure est étendue en adoptant un décalage cellulaire individuel (CIO), le paramètre R1a est modifié pour être 0 ; et
si la région de transfert intercellulaire sans coupure est étendue en adoptant le CIO en combinaison avec une amélioration de pilote, le paramètre R1a est modifié pour être Delta, Delta étant un incrément de puissance transmise d'un canal pilote commun primaire (P-CPICH).

17. Dispositif de traitement de transfert intercellulaire sans coupure selon la revendication 11, dans lequel, lorsque le composant de traitement détermine que l'UE entre dans la région de gain de combinaison sans coupure de DL à partir de la cellule de faible puissance, la stratégie de transfert intercellulaire sans coupure exécutée comprend :
l'envoi d'un message de demande d'établissement de liaison radio (RL) à un noeud B de la macro-cellule, ledit message de demande d'établissement de RL comprenant un paramètre qui invalide un canal de données physiques dédié de canal dédié amélioré (E-DCH) (E-DPDCH) d'UL, un canal de commande physique dédié d'E-DCH (E-DPCCH), et un canal de données physiques dédié (DPDCH) d'UL ;
l'initiation d'un message de mise à jour d'ensemble actif auprès de l'UE pour notifier à l'UE d'ajouter la macro-cellule dans un ensemble actif ;
l'envoi d'un message de préparation de reconfiguration de RL à un noeud B de la macro-cellule, ledit message de préparation de reconfiguration de RL comprenant les informations associées d'un canal partagé de liaison descendante haut débit (HS-DSCH) et un paramètre d'envoi d'octroi absolu (AG) ; l'envoi supplémentaire, par un contrôleur de réseau radio (RNC), d'un message de préparation de reconfiguration de RL à un noeud B de la cellule de faible puissance, ledit message de préparation de reconfiguration de RL comprenant un paramètre de transfert d'AG et les informations associées de suppression du HS-DSCH ; et
l'implémentation d'un processus de reconfiguration de canal physique et d'un processus de reconfiguration de porteuse radio vers l'UE pour implémenter un processus de changement d'une cellule de service de HS-DSCH et d'une cellule de service d'E-DCH dans la macro-cellule.

18. Dispositif de traitement de transfert intercellulaire sans coupure selon la revendication 11, dans lequel, lorsque le composant de traitement détermine que l'UE entre dans la région de gain de combinaison sans coupure d'UL à partir de la région de gain de combinaison sans coupure de DL, la stratégie de transfert intercellulaire sans coupure exécutée comprend :
l'envoi d'un message de préparation de reconfiguration de liaison radio (RL) à un noeud B de la cellule de faible puissance, ledit message de préparation de reconfiguration de RL comprenant un paramètre qui invalide un canal de données physiques dédié (DPDCH) de DL ;
l'envoi d'un message de préparation de reconfiguration de RL à un noeud B de la macro-cellule, ledit message de préparation de reconfiguration de RL comprenant un paramètre qui valide un canal de données physiques dédié de canal dédié amélioré (E-DCH) (E-DPDCH) d'UL, un canal de commande physique dédié d'E-DCH (E-DPCCH), et un canal de données physiques dédié (DPDCH) d'UL ; et
l'envoi d'un nouveau message de commande de mesure à l'UE, un paramètre R1b et un paramètre H1b du rapport de mesure d'événement étant modifiés dans le nouveau message de commande de mesure pour permettre à l'UE de communiquer un rapport de mesure d'événement 1B correspondant sur une limite de service de DL entre la macro-cellule et la cellule de faible puissance.

19. Dispositif de traitement de transfert intercellulaire sans coupure selon la revendication 18, dans lequel
si la région de transfert intercellulaire sans coupure est étendue en adoptant un décalage cellulaire individuel (CIO), le paramètre R1b est modifié pour être DU-CIO ; et
si la région de transfert intercellulaire sans coupure est étendue en adoptant le décalage cellulaire individuel (CIO) en combinaison avec une amélioration de pilote, le paramètre R1b est modifié pour être DU-CIO-Delta ; et
DU est une différence de signal de liaison entre une limite d'UL et une limite de DL entre la macro-cellule et la cellule de faible puissance, CIO est un paramètre de CIO de la cellule de faible puissance, et Delta est un incrément de puissance transmise d'un canal pilote commun primaire (P-CPICH).

20. Dispositif de traitement de transfert intercellulaire sans coupure selon la revendication 11, dans lequel, lorsque le composant de traitement détermine que l'UE entre dans la macro-cellule à partir de la région de gain de combinaison sans coupure d'UL, la stratégie de transfert intercellulaire sans coupure exécutée comprend :
l'envoi d'un message de mise à jour d'ensemble actif à l'UE pour notifier à l'UE de supprimer la cellule de faible puissance d'un ensemble actif ; et
l'envoi d'un message de suppression de liaison radio (RL) à l'UE pour supprimer une RL entre l'UE et la cellule de faible puissance.

21. Support de stockage lisible par ordinateur, qui comprend une série d'instructions exécutables par ordinateur, les instructions étant conçues pour exécuter le procédé de traitement de transfert intercellulaire selon l'une quelconque des revendications 1 à 10.
